(19) **Europäisches Patentamt / European Patent Office / Office européen des brevets**

(11) **EP 3 017 274 B1**

(12) # FASCICULE DE BREVET EUROPEEN

(45) Date de publication et mention de la délivrance du brevet:
**15.08.2018 Bulletin 2018/33**

(21) Numéro de dépôt: **14733238.1**

(22) Date de dépôt: **03.06.2014**

(51) Int Cl.:
*G01B 21/08* $^{(2006.01)}$      *G01B 11/06* $^{(2006.01)}$

(86) Numéro de dépôt international:
**PCT/FR2014/051308**

(87) Numéro de publication internationale:
**WO 2015/001210 (08.01.2015 Gazette 2015/01)**

(54) **PROCÉDÉ DE MESURE DE L'ÉPAISSEUR D'UNE COUCHE D'UN MATERIAU, PROCÉDÉ DE GALVANISATION ET DISPOSITIF DE MESURE ASSOCIÉS**

VERFAHREN ZUR MESSUNG DER DICKE EINER MATERIALSCHICHT, FEUERVERZINKUNGSVERFAHREN UND ZUGEHÖRIGE MESSVORRICHTUNG

METHOD FOR MEASURING THE THICKNESS OF A LAYER OF MATERIAL, GALVANIZING METHOD AND RELATED MEASURING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2013 FR 1356404**

(43) Date de publication de la demande:
**11.05.2016 Bulletin 2016/19**

(73) Titulaire: **Enovasense**
**94800 Villejuif (FR)**

(72) Inventeurs:
• **INARD-CHARVIN, Jean**
**94300 Vincennes (FR)**
• **BRUNO, Geoffrey**
**F-75014 Paris (FR)**

(74) Mandataire: **Jacobacci Coralis Harle**
**32, rue de l'Arcade**
**75008 Paris (FR)**

(56) Documents cités:
**EP-A2- 0 233 120     EP-B1- 0 097 473**
**FR-A1- 2 980 846     US-A1- 2002 031 164**

• **WU D ET AL: "NONDESTRUCTIVE INSPECTION OF TURBINE BLADES WITH LOCK-IN THERMOGRAPHY", MATERIALS SCIENCE FORUM, TRANS TECH PUBLICATIONS LTD-SWITZERLAND, CH, vol. 210 - 213, 1 janvier 1996 (1996-01-01), pages 289-294, XP002045760, ISSN: 0255-5476**

**Description**

DOMAINE TECHNIQUE AUQUEL SE RAPPORTE L'INVENTION

La présente invention concerne de manière générale le domaine de la métrologie.

Elle concerne plus particulièrement un procédé de mesure de l'épaisseur d'une couche de matériau grâce à des moyens d'émission d'un faisceau lumineux qui émettent un faisceau lumineux de manière à chauffer ladite couche de matériau.

La présente invention trouve une application particulièrement avantageuse dans un procédé de galvanisation d'un substrat métallique pour déterminer l'épaisseur de la couche de zinc déposée sur ce substrat métallique.

La présente invention concerne par ailleurs un dispositif de mesure pour déterminer de l'épaisseur d'une couche d'un matériau.

ARRIERE-PLAN TECHNOLOGIQUE

On connaît des documents EP 0233120 et US 2002/031164 des procédés de mesure de l'épaisseur d'une couche de matériau grâce à des moyens d'émission d'un faisceau lumineux qui émettent un faisceau lumineux de manière à chauffer ladite couche de matériau.

Les procédés de mesure décrits dans les deux documents précités présentent le désavantage de ne permettre qu'une détermination relative de l'épaisseur de la couche de matériau.

En effet, avec ce type de procédés, il est nécessaire de recourir à un échantillon de référence comprenant une couche d'épaisseur connue pour mesurer l'épaisseur d'une couche de matériau d'un échantillon quelconque.

De tels procédés, en plus d'être généralement peu précis, sont souvent complexes à mettre en oeuvre.

D'autres procédés permettent une mesure absolue de l'épaisseur de la couche de matériau, en ce sens qu'ils ne requièrent aucun échantillon de référence.

On connaît ainsi du document «Photothermal Radiometry for Spatial Mapping of Spectral and Materials Properties» (Nordal and Kanstad, Scanned Image Microscopy, Academic Press London, 1980) des techniques de radiométrie photo-thermiques pour mesurer l'épaisseur d'une couche de matériau.

Ces techniques de radiométrie photo-thermique, basées sur la mesure des variations de la température de surface de la couche de matériau, utilisent un détecteur infra-rouge mesurant le flux de chaleur rayonnée par la couche de matériau qui est chauffée localement en un point de chauffage par un faisceau lumineux intense émis par une source lumineuse puissante, par exemple une source laser.

Le flux de chaleur rayonnée par la couche de matériau est généralement peu intense et fortement bruité, si bien que rapport signal à bruit de la mesure est faible.

Il est connu de mettre en oeuvre une méthode de détection synchrone dans laquelle on utilise un faisceau lumineux dont la puissance optique est modulée sinusoïdalement à une fréquence de modulation connue.

La modulation de la puissance optique de la source lumineuse entraîne une modulation de la température de la couche de matériau chauffée par le faisceau lumineux émis par cette source lumineuse.

Le signal de mesure délivré par le détecteur photo-thermique, qui est représentatif du flux de chaleur rayonnée par la couche de matériau au niveau du point de chauffage localisé, présente alors également des oscillations dues aux variations de la température de surface de la couche de matériau.

Dans la méthode de détection synchrone, on utilise par ailleurs un amplificateur à verrouillage de phase («lock-in amplifier») pour effectuer un filtrage analogique.

Cet amplificateur accepte, en entrée, un signal non filtré, qui est le produit dudit signal de mesure délivré par le détecteur photo-thermique avec un signal « optique » représentatif de la puissance optique modulée du faisceau lumineux, et génère, en sortie, un signal représentatif du déphasage entre la composante sinusoïdale du signal de mesure à la fréquence de modulation du faisceau lumineux et le signal optique. Un tel amplificateur est par exemple utilisé dans le document US 4513384.

On peut alors calculer l'épaisseur de la couche de matériau à partir de la valeur de ce déphasage (voir par exemple « Thermal-wave detection and thin-film thickness measurements with laser beam deflection », Applied Optics, Vol. 22, No. 20, pp. 3169-3176, 15 octobre 1983), et d'un ensemble de caractéristiques thermo-physiques de la couche de matériau, par exemple sa conductivité et sa diffusivité thermique, son coefficient d'absorption optique du faisceau lumineux, ou encore sa résistance thermique.

Cependant, l'utilisation d'une détection synchrone avec un amplificateur à verrouillage de phase impose de réaliser la mesure sur un temps de mesure long afin d'effectuer un moyennage du signal non filtré pour améliorer le rapport signal à bruit.

On connaît par ailleurs du document « Phase lock-in laser active pyrometry for surface layer characterisation of tokamaks walls» (Melyukov et al., 10th International Conférence on Quantitative Infrared Thermography, July 27-30, 2010, Québec) un procédé de mesure de l'épaisseur d'une couche de matériau dans lequel :

- on mesure la puissance optique modulée au moyen d'une photodiode,
- on mesure le flux de chaleur rayonnée au moyen d'un pyromètre, et
- on détermine en temps réel, grâce à une détection synchrone et un amplificateur à verrouillage de phase, le déphasage entre le signal de mesure et le signal optique à partir des deux mesures précédentes.

Un tel procédé de mesure, qui utilise deux détecteurs distincts, est malheureusement peu précis pour déterminer le déphasage entre la composante sinusoïdale du flux de chaleur rayonnée et la puissance optique modulée.

De plus, les temps de mesure d'un tel procédé sont longs.

Enfin, il est peu adapté pour effectuer une mesure « à chaud » avec une couche de matériau rayonnant un flux de chaleur important qui risquerait d'endommager le laser et le détecteur, par exemple une couche de matériau présentant une température supérieure ou égale à 150 degrés Celsius.

OBJET DE L'INVENTION

Afin de remédier aux inconvénients précités de l'état de la technique, la présente invention propose un procédé de mesure d'épaisseur qui est à la fois précis, rapide et adapté pour effectuer une mesure d'épaisseur « à chaud », lorsque la température de la couche de matériau est élevée.

Plus particulièrement, on propose selon l'invention un procédé de mesure de l'épaisseur d'une couche d'un matériau grâce à des moyens d'émission d'un faisceau lumineux commandés électriquement par un signal de commande sinusoïdal ayant une fréquence de modulation $f_m$ et une phase de commande $\phi_{com}$, de sorte que ledit faisceau lumineux présente une puissance optique modulée sinusoïdalement à ladite fréquence de modulation $f_m$, ledit procédé de détermination comportant :

- une étape de calibration desdits moyens d'émission consistant à déterminer, grâce à des moyens de détection photo-thermiques, un déphasage de calibration $\Delta\phi_{cal}$ entre ladite puissance optique modulée et ledit signal de commande pour ladite fréquence de modulation $f_m$,
- une étape de chauffage de ladite couche de matériau par irradiation de ladite couche de matériau avec ledit faisceau lumineux,
- une étape de détection d'une composante sinusoïdale d'un flux de chaleur rayonnée par ladite couche chauffée, grâce auxdits moyens de détection photo-thermiques,
- une étape de calcul, pour ladite fréquence de modulation $f_m$ du signal de commande, d'un déphasage $\Delta\phi_{th/opt}$ entre ladite composante sinusoïdale du flux de chaleur rayonnée et ladite puissance optique modulée du faisceau lumineux, en tenant compte dudit déphasage de calibration $\Delta\phi_{cal}$ préalablement déterminé lors de l'étape de calibration, et
- une étape de détermination de l'épaisseur de ladite couche de matériau en fonction dudit déphasage $\Delta\phi_{th/opt}$ calculé entre ladite composante sinusoïdale du flux de chaleur rayonnée et ladite puissance optique modulée du faisceau lumineux.

Ainsi, grâce à l'invention, il est possible de déterminer précisément et rapidement l'épaisseur de la couche de matériau.

En effet, grâce à l'étape de calibration préalable réalisée grâce aux moyens de détection photo-thermiques utilisés lors de l'étape de détection, le déphasage entre la puissance optique modulée du faisceau lumineux et le signal de commande commandant les moyens d'émission de ce faisceau lumineux est calibré, ce qui améliore la précision de la détermination du déphasage entre la composante sinusoïdale du flux de chaleur rayonnée et la puissance optique modulée.

La précision et la rapidité de la mesure ultérieure de l'épaisseur de la couche de matériau s'en trouvent alors améliorées.

Cette amélioration de la précision et de la rapidité de la détermination de l'épaisseur autorise la réalisation d'une mesure « à chaud » en toute sécurité et avec une précision comparable à la précision des méthodes de mesure « à froid » existantes. Car ces méthodes « à froid » nécessitent d'attendre un retour de la température de la couche à une température inférieure ou égale à 50 °C avant de pouvoir effectuer une mesure d'épaisseur de cette couche.

Selon une mise en oeuvre particulière du procédé de mesure selon l'invention :

- lors de l'étape de détection, lesdits moyens de détection photo-thermiques délivrent un signal de mesure qui est représentatif dudit flux de chaleur rayonnée,
- il est prévu, après ladite étape de détection et avant ladite étape de calcul, une étape de filtrage numérique dudit signal de mesure de manière à :

- extraire une composante sinusoïdale dudit signal de mesure qui est modulée à ladite fréquence de modulation $f_m$ du signal de commande, et
- déterminer une phase de mesure $\phi_{mes}$ de cette composante sinusoïdale dudit signal de mesure,

- lors de l'étape de calcul, ledit déphasage $\Delta\phi_{th/opt}$ entre ladite composante sinusoïdale du flux de chaleur rayonnée et ladite puissance optique modulée du faisceau lumineux est calculé, pour ladite fréquence de modulation $f_m$ du signal de commande, à partir :

- d'un déphasage de mesure $\Delta\phi_{mes}$ entre ladite composante sinusoïdale du signal de mesure et ledit signal de commande, soit $\Delta\phi_{mes} = \phi_{mes} - \phi_{com}$, et
- du déphasage de calibration $\Delta\phi_{cal}$, préalablement déterminé lors de ladite étape de calibration.

Ainsi, le procédé de mesure selon l'invention permet d'obtenir un bon rapport signal à bruit sans utiliser une détection synchrone.

On effectue ici un filtrage numérique sur le signal de mesure, ce qui permet d'effectuer une mesure rapide.

D'autres caractéristiques non limitatives et avantageuses du procédé de mesure conforme à l'invention sont les suivantes :

- on répète les étapes antérieures à ladite étape de calcul pour une autre fréquence de modulation $f'_m$ du signal de commande, différente de ladite fréquence de modulation $f_m$ utilisée précédemment ; lors de l'étape de calcul, on calcule également, pour ladite autre fréquence de modulation $f'_m$, un autre déphasage $\Delta\phi'_{th/opt}$ entre ladite composante sinusoïdale à cette autre fréquence de modulation $f'_m$ du flux de chaleur rayonnée et ladite puissance optique modulée du faisceau lumineux à cette autre fréquence de modulation $f'_m$, et lors de l'étape de détermination, on détermine l'épaisseur de ladite couche de matériau en fonction en outre dudit autre déphasage $\Delta\phi'_{th/opt}$ calculé ;
- lesdites étapes de chauffage et de détection répétées pour ladite autre fréquence de modulation $f'_m$ du signal de commande sont exécutées en parallèle de l'exécution des étapes postérieures à ladite étape de détection pour ladite fréquence de modulation $f_m$ du signal de commande ;
- lors de l'étape de détermination, on ajuste, en fonction de paramètres d'ajustement, une courbe représentative d'un déphasage théorique $\Delta\phi_{th/opt,theo}$ entre ladite composante sinusoïdale dudit flux de chaleur rayonnée et ladite puissance optique modulée du faisceau lumineux en fonction de la fréquence de modulation $f_m$ du signal de commande, prenant en compte les déphasages $\Delta\phi_{th/opt}$, $\Delta\phi'_{th/opt}$ calculés pour différentes fréquences de modulation $f_m$, $f'_m$, et on détermine l'épaisseur de ladite couche de matériau comme étant l'un desdits paramètres d'ajustement de la courbe représentative ajustée.

L'invention trouve une application particulièrement avantageuse dans l'utilisation d'un procédé de mesure conforme à l'invention pour mesurer l'épaisseur d'une couche de zinc déposée sur un substrat métallique, par exemple lors d'un procédé de galvanisation.

Ainsi, l'invention propose également un procédé de galvanisation d'un substrat métallique comprenant les étapes successives suivantes :

- préparer une surface de dépôt dudit substrat métallique,
- plonger ledit substrat métallique dans un bain de zinc en fusion,
- sortir ledit substrat métallique du bain de zinc en fusion, ladite surface de dépôt du substrat métallique étant recouverte d'une couche de zinc, et
- déterminer l'épaisseur de ladite couche de zinc déposée sur ledit substrat métallique selon un procédé de mesure conforme à l'invention.

D'autres caractéristiques non limitatives et avantageuses du procédé de galvanisation conforme à l'invention sont les suivantes :

- on détermine l'épaisseur de ladite couche de zinc à la sortie du bain, lorsque ladite couche de zinc présente une température comprise entre 150 et 480 degrés Celsius ;
- on compare l'épaisseur de ladite couche de zinc mesurée à la sortie du bain avec une épaisseur seuil souhaitée, et lorsque ladite épaisseur mesurée est inférieure à ladite épaisseur seuil, on replonge ledit substrat métallique dans le bain de zinc en fusion, de manière à ajouter une couche supplémentaire de zinc sur ladite couche de zinc ;
- pour la galvanisation d'une série de substrats métalliques, on adapte les paramètres de dépôt de la couche de zinc déposée sur l'un desdits substrats de la série fonction de l'épaisseur de couche de zinc mesurée à la sortie du bain sur au moins un des substrats précédemment galvanisés.

L'invention propose enfin un dispositif de mesure pour déterminer l'épaisseur d'une couche d'un matériau comportant :

- des moyens de commande électrique adaptés à délivrer un signal de commande sinusoïdal ayant une fréquence de modulation $f_m$ et une phase de commande $\phi_{com}$,
- des moyens d'émission d'un faisceau lumineux commandés électriquement par lesdits moyens de commande électrique de manière à émettre un faisceau lumineux présentant une puissance optique modulée sinusoïdalement à ladite fréquence de modulation $f_m$ du signal de commande,
- des moyens de détection photo-thermiques adaptés à détecter un flux de chaleur rayonnée par ladite couche de matériau chauffée par ledit faisceau lumineux et délivrant un signal de mesure qui est représentatif dudit flux de chaleur rayonnée par ladite couche de matériau,
- des moyens de filtrage numérique adaptés à extraire dudit signal de mesure une composante sinusoïdale modulée à ladite fréquence de modulation $f_m$ du signal de commande pour déterminer une phase de mesure $\phi_{th}$ de cette composante sinusoïdale du signal de mesure, et
- des moyens de calcul adaptés à calculer, pour ladite fréquence de modulation $f_m$ du signal de commande, un déphasage $\Delta\phi_{th/opt}$ entre une composante sinusoïdale du flux de chaleur rayonnée et ladite puissance optique modulée du faisceau lumineux et, à partir :

  - d'un déphasage de mesure $\Delta\phi_{mes}$ entre ladite composante sinusoïdale du signal de mesure délivré par les moyens de détection photo-thermiques et ledit signal de commande, soit $\Delta\phi_{mes} = \phi_{mes} - \phi_{com}$, et
  - d'un déphasage de calibration $\Delta\phi_{cal}$, déterminé grâce aux moyens de détection photo-thermiques entre ladite puissance optique modulée du faisceau lumineux et ledit signal de commande,

  et à déterminer l'épaisseur de ladite couche de matériau en fonction du déphasage $\Delta\phi_{th/opt}$ entre ladite composante sinusoïdale du flux de chaleur rayonnée et ladite puissance optique modulée du faisceau lumineux.

D'autres caractéristiques non limitatives et avantageuses du dispositif de mesure conforme à l'invention sont les suivantes :

- les moyens d'émission d'un faisceau lumineux comprennent une diode laser ou un laser, et les moyens de commande électrique comprennent un générateur de courant ;
- le dispositif de mesure comporte en outre une tête de mesure déportée reliée auxdits moyens d'émission d'un faisceau lumineux au moyen d'un faisceau de fibres optiques, ladite tête de mesure déportée étant adaptée à collecter ledit flux de chaleur rayonnée ;
- les moyens de détection photo-thermiques comprennent un détecteur photo-thermique placé dans ladite tête de mesure déportée, ledit détecteur photo-thermique collectant ledit flux de chaleur rayonnée pour le transmettre grâce audit faisceau de fibres optiques.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'un dispositif de mesure selon un premier mode de réalisation ;
- la figure 2 est une vue schématique d'un dispositif de mesure selon un deuxième mode de réalisation ;
- la figure 3 est un diagramme schématique illustrant le procédé de mesure selon l'invention ;
- la figure 4 représente les courbes du signal de commande, de la puissance optique modulée et de la composante sinusoïdale du flux de chaleur rayonnée ;
- la figure 5 représente la courbe théorique du déphasage entre la composante sinusoïdale du flux de chaleur rayonnée et la puissance optique modulée du faisceau lumineux en fonction de la fréquence de modulation obtenue après ajustement des paramètres de mesure.

En préambule, on notera que les éléments identiques ou similaires des différents modes de réalisation représentés sur les différentes figures seront référencés par les mêmes signes de référence et ne seront pas décrits à chaque fois.

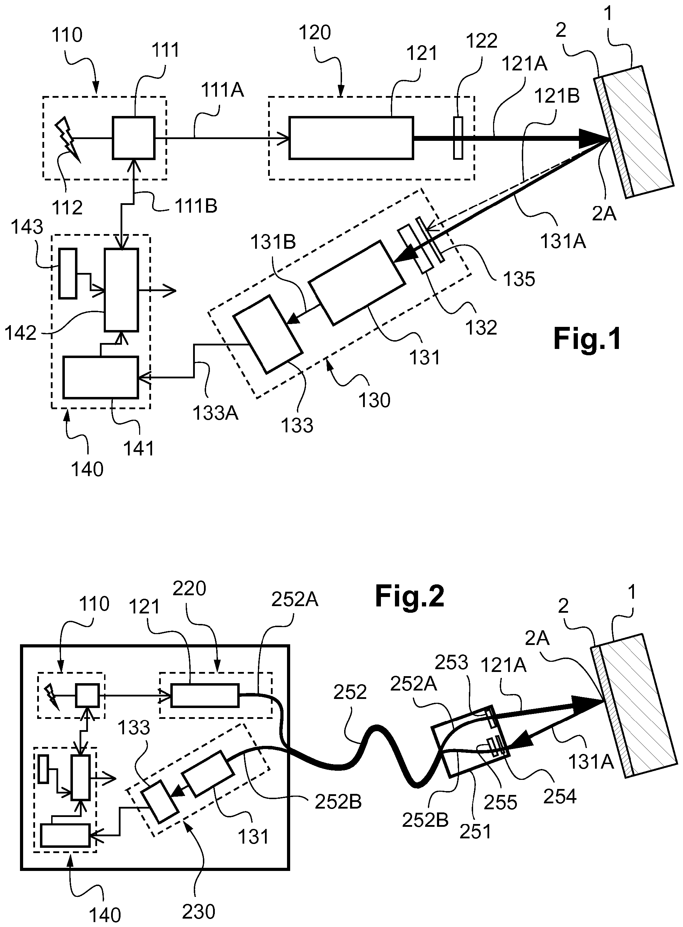

Sur les figures 1 et 2, on a représenté deux modes de réalisation d'un dispositif de mesure 100 ; 200 destiné à mesurer l'épaisseur d'une couche 2 d'un matériau.

Les deux modes de réalisation du dispositif de mesure 100 ; 200 ne diffèrent qu'en ce que le dispositif de mesure 200 comporte une tête de mesure déportée 251 (voir figure 2) permettant de réaliser la mesure d'épaisseur au plus près de la couche 2 de matériau tout en éloignant les autres éléments du dispositif de mesure 200 de cette couche 2 de matériau. On verra que cette configuration est particulièrement avantageuse pour une mesure « à chaud » de la couche 2 de matériau.

Dans les deux modes de réalisation représentés sur les figures 1 et 2, la couche 2 de matériau recouvre un substrat 1.

En variante, il est possible de mettre en oeuvre le procédé de l'invention afin de mesurer l'épaisseur d'une couche de matériau qui serait seule, sous la forme d'une plaque ou d'un film mince. On entend ici par plaque ou film mince, une plaque ou un film présentant une épaisseur très inférieure à sa longueur et à sa largeur.

Dans l'exemple détaillé ici, la couche 2 de matériau est, par exemple, une couche de zinc déposée sur le substrat 1 métallique en acier.

Comme représenté sur les figures 1 et 2, le dispositif de mesure 100, 200 comprend également des moyens d'émission 120 ; 220 commandés électriquement par les moyens de commande 110.

Ces moyens de commande électrique 110 délivrent un signal de commande 111A.

Les moyens de commande électrique 110 comprennent ici une source d'alimentation électrique 112 reliée à un générateur de courant 111 basse fréquence (voir figures 1 et 2). Ce générateur de courant 111 basse fréquence comprend ici une source de tension sinusoïdale basse fréquence et un régulateur de courant qui convertit les variations de tension sinusoïdales en des variations de courant.

Ainsi, le générateur de courant 111 génère, en fonction d'une consigne de fréquence, un courant électrique dont l'intensité, exprimée en ampère (symbole A), est modulée au cours du temps.

Plus particulièrement ici, le générateur de courant 111 génère, en fonction du temps t, un courant sinusoïdal à une fréquence de modulation $f_m$.

Le courant sinusoïdal généré par le générateur de courant 111 forme un signal de commande délivré par les moyens de commande électrique 110.

De manière générale, ce signal de commande, noté par la suite $i_{com}(t)$, peut s'écrire sous la forme suivante : $i_{com}(t) = i_0 * cos(2*\pi*f_m*t + \phi_{com})$, où $i_0$ et $\phi_{com}$ représentent respectivement l'amplitude de commande, exprimée en ampère (A), et la phase de commande, exprimée en radians (rad), du signal de commande.

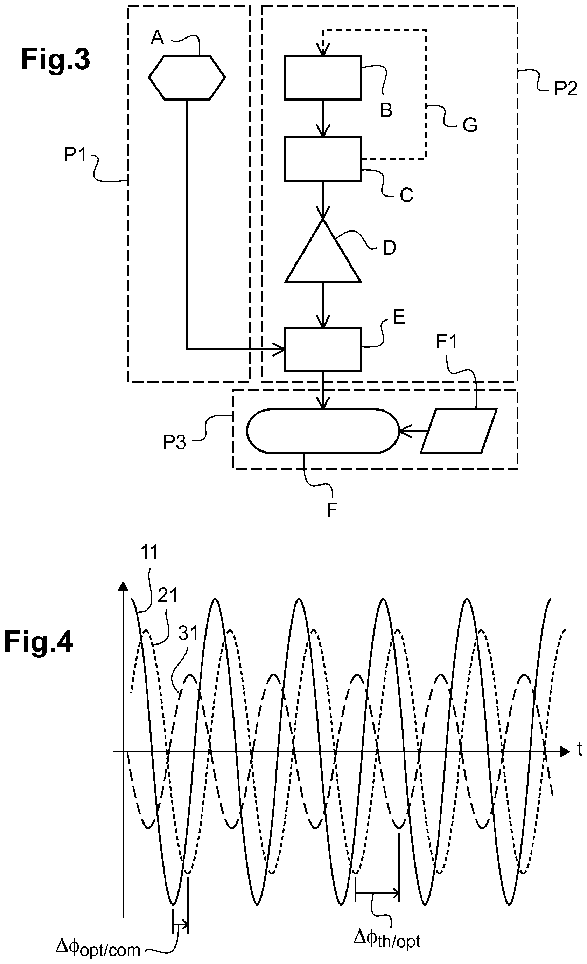

On a représenté sur la figure 4 un exemple d'une courbe 11 représentative du signal de commande en fonction du temps, pour une fréquence de modulation $f_m$ de 1000 Hz, une amplitude de commande égale à 1 ampère, et une phase de commande $\phi_{com}$ égale à 0 radian.

Les moyens d'émission 120 ; 220 comportent une source lumineuse 121 qui est ici une diode laser.

La diode laser utilisée ici est une diode qui émet de la lumière à une longueur d'onde d'émission $\lambda_L$ égale à 1064 nanomètres (nm) et présente une puissance optique maximale $P_{max}$ égale à 20 Watt (W).

En variante, la source lumineuse des moyens d'émission peut être par exemple un laser, tel qu'un laser à gaz, un laser solide ou un laser à fibre dopée.

Commandés par les moyens de commande 110, la diode laser émet un faisceau lumineux 121A à la longueur d'onde d'émission $\lambda_L$.

De manière avantageuse, la longueur d'onde d'émission $\lambda_L$ est choisie en fonction de la nature du matériau constituant la couche 2 pour que le faisceau lumineux 121A issu de la source lumineuse 121 soit absorbé au mieux par la couche 2 afin de la chauffer de manière optimale.

Dans les deux modes de réalisation représentés sur les figures 1 et 2, la diode laser est directement pilotée en courant par le générateur de courant 111 qui délivre le signal de commande 111A.

Ainsi commandé, le faisceau lumineux 121A émis par la diode laser présente, en fonction du temps t, une puissance optique $P_{opt}(t)$, exprimée en watt (W), qui est modulée sinusoïdalement à la fréquence de modulation $f_m$ du signal de commande 111A.

De manière générale, la puissance optique $P_{opt}(t)$ du faisceau lumineux 121A émis par la source lumineuse 121 peut s'écrire sous la forme: $P_{opt}(t) = P_0 * cos(2*\pi*f_m*t + \phi_{opt})$, où $P_0$ et $\phi_{opt}$ représentent respectivement la puissance optique modulée maximale, exprimée en watt, et la phase du faisceau lumineux 121A, exprimée en radians (rad). Cette phase $\phi_{opt}$ du faisceau lumineux 121A sera appelée par la suite « phase optique ».

On a représenté sur la figure 4, par la courbe référencée 21, un exemple de la puissance optique $P_{opt}(t)$ modulée du faisceau lumineux 121A en fonction du temps t .

On observe sur cette figure 4 que la courbe représentative 21 de la puissance optique $P_{opt}(t)$ modulée et la courbe représentative 11 du signal de commande $i_{com}(t)$ présentent, entre elles, pour la fréquence de modulation $f_m$, un décalage temporel.

Dans la suite, on désignera respectivement par les références 11 et 21 le signal de commande et la puissance optique modulée en général.

Ce décalage temporel est dû au temps de réponse de la source lumineuse 121 qui, commandée électriquement par le générateur de courant 111, ne réagit pas instantanément au signal de commande 111A pour émettre le faisceau lumineux 121A.

En d'autres termes, la puissance optique $P_{opt}(t)$ modulée et le signal de commande $i_{com}(t)$ sont, à la fréquence de modulation $f_m$, déphasés l'un par rapport à l'autre : ces deux grandeurs physiques présentent, entre elles, un déphasage $\Delta\phi_{opt/com}$.

Ce déphasage $\Delta\phi_{opt/com}$ est égal à la différence entre la phase optique $\phi_{opt}$ de la puissance optique 21 modulée et la phase de commande $\phi_{com}$ du signal de commande 11 (voir figure 4), soit $\Delta\phi_{opt/com} = \phi_{opt} - \phi_{com}$.

On verra dans la suite de la description que, lors d'une étape de calibration du procédé de mesure selon l'invention, un déphasage de calibration $\Delta\phi_{cal}$ est déterminé, à la fréquence de modulation $f_m$, ce déphasage de calibration $\Delta\phi_{cal}$ étant fonction du déphasage $\Delta\phi_{opt/com}$ entre la puissance optique $P_{opt}$ modulée du faisceau lumineux 121A et le signal de commande 11.

Les moyens d'émission 120, 220 sont adaptés à irradier la couche 2 de matériau avec le faisceau lumineux 121A qui est incident sur cette couche 2 en un point de chauffage 2A (voir figures 1 et 2).

Ceci a pour effet de chauffer la couche 2 de matériau au niveau du point de chauffage 2A et autour de celui-ci, par suite de l'absorption du faisceau lumineux 121A et de l'échauffement de la couche 2.

Par suite de cet échauffement, la température de la couche 2 au niveau du point de chauffage 2A va varier et la couche 2, chauffée localement, va alors émettre un flux de chaleur rayonnée 131A (voir figures 1 et 2) par rayonnement thermique dans tout l'espace.

Ce flux de chaleur rayonnée 131A, exprimé en Watt (W), est lié à la température locale atteinte par la couche 2, en particulier au point de chauffage 2A.

De manière générale, étant donnée la température locale atteinte, le flux de chaleur rayonnée 131A est émis dans le domaine des longueurs d'onde de l'infra-rouge.

La puissance optique 21 du faisceau lumineux 121A étant modulée, la fraction de la puissance optique absorbée par la couche 2 varie également dans le temps de sorte que le chauffage localisé de cette couche 2 au niveau du point de chauffage 2A oscille également en fonction du temps.

En conséquence, la température de la couche 2 de matériau au point de chauffage 2A présente également des oscillations dans le temps.

Ainsi, le flux de chaleur rayonnée 131A par la couche 2 varie en fonction du temps. C'est grâce à la mesure des variations de ce flux de chaleur rayonnée 131A par le dispositif de mesure 100, 200 qu'il est possible de déterminer l'épaisseur de la couche 2 de matériau.

À cet effet, comme représenté pour les modes de réalisation des figures 1 et 2, le dispositif de mesure 100, 200 comporte des moyens de détection 130, 230 adaptés à détecter le flux de chaleur rayonnée 131A par la couche 2 chauffée par le faisceau lumineux 121A.

En particulier ici, ces moyens de détection 130, 230 comprennent un détecteur photo-thermique 131 infra-rouge pour recueillir le flux de chaleur rayonnée 131A par la couche 2.

Ce détecteur photo-thermique 131 peut être par exemple un mono-détecteur infra-rouge tel qu'une cellule en séléniure de plomb, un capteur refroidi de type C.I.D., c'est-à-dire « *Charge-Injection Device* » en anglais, en antimoniure d'indium ou un capteur refroidi de tellurure de mercure-cadmium.

Le détecteur photo-thermique 131 génère un signal électrique analogique 131B (voir figures 1 et 2) qui est fonction du flux de chaleur rayonnée 131A par le point de chauffage localisé 2A de la couche 2 irradiée par le faisceau lumineux 121A.

Les moyens de détection 130, 230 comportent également un convertisseur analogique/numérique 133 auquel le signal analogique 131B est transmis.

Ce convertisseur analogique/numérique 133 délivre alors un signal de mesure 133A (voir figures 1 et 2), qui est un signal numérique et qui est représentatif du flux de chaleur rayonnée 131A par la couche 2.

Comme représenté sur les figures 1 et 2, le dispositif de mesure 100, 200 comporte par ailleurs une unité électronique et informatique 140, ci-après désignée par l'acronyme UEI.

Cette UEI 140 comprend tout d'abord des moyens de filtrage numérique 141 qui reçoivent en entrée le signal de mesure 133A numérisé par le convertisseur analogique/numérique 133 des moyens de détection 130, 230.

Comme expliqué précédemment, le flux de chaleur rayonnée 131A par la couche 2 présente des oscillations liées aux variations de température de la couche 2 de matériau absorbant le faisceau lumineux 121A dont la puissance optique 21 est modulée en fonction du temps (voir figure 4).

On a représenté sur la figure 4, un exemple d'une courbe représentative 31 d'une composante sinusoïdale du flux de chaleur rayonnée 131A en fonction du temps.

Le signal de mesure 133A, qui est fonction du flux de chaleur rayonnée 131A par la couche 2, comprend également une composante sinusoïdale modulée à la fréquence de modulation $f_m$.

Cette composante sinusoïdale du signal de mesure 133A est déphasée par rapport à la courbe représentative 11 du signal de commande. On appellera phase de mesure $\phi_{mes}$, la phase de cette composante sinusoïdale du signal de mesure 133A.

Comme le signal de mesure 133A est représentatif du flux de chaleur rayonnée 131A par la couche 2 de matériau détecté par le photo-détecteur 131, cette phase de mesure $\phi_{mes}$ est la somme d'une phase « thermique » $\phi_{th}$ qui correspond à la composante sinusoïdale 31 du flux de chaleur rayonnée 131A et d'une phase interne $\phi_{int}$ du photo-détecteur 131 et de l'électronique de la chaîne d'acquisition, soit encore $\phi_{mes} = \phi_{th} + \phi_{int}$.

Dans la suite, on désignera par la référence 31A la composante sinusoïdale du signal de mesure 133A en général.

Les moyens de filtrage numérique 141 de l'UEI 140 sont programmés afin d'extraire la composante sinusoïdale 31A du signal de mesure 133A et déterminer la phase de mesure $\phi_{mes}$ de cette composante sinusoïdale 31A, à la fréquence de modulation $f_m$ du signal de commande 11.

Plus précisément, les moyens de filtrage numérique 141 effectuent ici les opérations classiques suivantes :

i) calcul de la transformée de Fourier du signal de mesure 133A,

ii) extraction, dans le domaine de Fourier, de la composante sinusoïdale 31A du signal de mesure 133A par application d'un filtre passe-bande très étroit et très sélectif, par exemple de largeur 10 hertz autour de la fréquence de modulation $f_m$.

En variante, la phase de mesure peut être déterminée en calculant après l'opération ii) précédente, la transformée de Fourier inverse de la transformée de Fourier du signal de mesure filtrée puis en déterminant la phase de mesure directement par comparaison avec le signal de commande 11.

En variante encore, les moyens de filtrage numérique calculent la corrélation croisée, aussi appelée covariance croisée, entre le signal de mesure et le signal de commande qui va permettre d'extraire, dans le domaine de Fourier, un pic de ressemblance entre ces deux signaux. Ce pic de ressemblance aura une expression complexe dont l'argument sera le déphasage entre les deux signaux.

L'UEI 140 comporte également des moyens de calcul 142 qui séparent la partie réelle et la partie imaginaire de la composante sinusoïdale 31A pour déterminer la phase de mesure $\phi_{mes}$.

Plus précisément, ces moyens de calcul 142 séparent la partie réelle et la partie imaginaire de la transformée de Fourier inverse de la transformée de Fourier de la composante sinusoïdale 31A du signal de mesure 133A, cette dernière transformée de Fourier étant une fonction complexe.

Ensuite, les moyens de calcul 142 calculent, pour la fréquence de modulation $f_m$ du signal de commande 11, un déphasage $\Delta\phi_{th/opt}$ entre la composante sinusoïdale 31 du flux de chaleur rayonnée 131A et la puissance optique 21 modulée du faisceau lumineux 121A.

Pour cela, les moyens de calcul 142 sont reliés :

- aux moyens de filtrage numérique 141 qui transmettent aux moyens de calcul 142 la phase de mesure $\phi_{mes}$ obtenue après filtrage numérique du signal de mesure 133A,
- au générateur de courant 111 qui transmet, *via* la liaison 111B, aux moyens de calcul 141 la phase de commande $\phi_{com}$ du signal de commande 11, et
- à des moyens de mémorisation 143 dans lesquels ont été préalablement enregistré le déphasage de calibration $\Delta\phi_{cal}$ déterminé, à la fréquence de modulation $f_m$, lors de l'étape de calibration du procédé de mesure selon l'invention.

Les moyens de calcul 142 sont programmés pour calculer le déphasage $\Delta\phi_{th/opt}$ entre la composante sinusoïdale 31 du flux de chaleur rayonnée131A et la puissance optique 21 modulée du faisceau lumineux 121A, à partir :

- d'un déphasage de mesure $\Delta\phi_{mes}$ entre la phase de mesure $\phi_{mes}$ et la phase de commande $\phi_{com}$, ce déphasage de mesure $\Delta\phi_{mes}$ étant donc tel que : $\Delta\phi_{mes} = \phi_{mes} - \phi_{com}$, et
- du déphasage de calibration $\Delta\phi_{cal}$ préalablement enregistré dans les moyens de mémorisation 143.

Les moyens de calcul 142 sont également programmés pour déterminer l'épaisseur de la couche 2 de matériau en fonction du déphasage $\Delta\phi_{th/opt}$ entre la composante sinusoïdale 31 du flux de chaleur rayonnée 131A par la couche 2 de matériau et la puissance optique 21 modulée du faisceau lumineux 121A.

On verra dans la suite de la description comment ces moyens de mesure sont utilisés dans le procédé de mesure selon l'invention afin d'effectuer cette détermination.

Dans les deux modes de réalisation du dispositif de mesure 100 ; 200 représentés sur les figures 1 et 2, l'UEI 140 peut également commander les moyens de commande 110 grâce à la liaison 111B pour ajuster la fréquence de modulation $f_m$ du générateur de courant 111.

Dans le premier mode de réalisation représenté sur la figure 1, les moyens d'émission 120 du dispositif de mesure100 comprennent des moyens optiques de collimation 122 destinés à collimater le faisceau lumineux 121A à sa sortie de la source lumineuse 121.

En effet, le faisceau lumineux 121A émis par la diode laser présente un angle d'ouverture élevé, par exemple compris entre 10° et 40°.

Les moyens optiques de collimation 122 sont ici formés d'un doublet de lentilles corrigées des aberrations optiques dans la gamme de longueur d'onde d'émission de la diode laser.

En variante, les moyens optiques de collimation peuvent comprendre par exemple une lentille asphérique.

Grâce à l'insertion des moyens optiques de collimation 122 sur le trajet du faisceau lumineux 121A, celui-ci présente alors une divergence angulaire plus faible, typiquement inférieure à 5°.

Ainsi, le faisceau lumineux 121A est plus fin, c'est-à-dire que son rayon $r_0$ à $1/e$, exprimé en mètre (m) ou millimètre (mm), est petit, par exemple compris entre 0,5 mm et 3 mm.

De cette façon, la quantité surfacique d'énergie déposée par le faisceau lumineux 121A absorbé par la couche 2 de matériau est plus importante, et l'élévation de température au point de chauffage localisé est plus importante.

Dans ce premier mode de réalisation (voir figure 1), les moyens de détection photo-thermiques 130 comprennent également un filtre optique 135 et des moyens optiques de collection 132 placés entre la couche 2 de matériau et le détecteur photo-thermique 131, sur le trajet du flux de chaleur rayonnée 131A.

Le filtre optique 135 est conçu de manière à présenter une transmission lumineuse faible pour des longueurs d'onde proches de la longueur d'onde d'émission $\lambda_L$ de la source lumineuse 121.

Un tel filtre optique 135 peut être par exemple un filtre en germanium, présentant une densité optique supérieure ou égale à 10, de préférence supérieure ou égale à 20.

Ce filtre optique 135 permet d'empêcher l'illumination du détecteur photo-thermique 131 par le faisceau lumineux réfléchi 121B sur la surface de la couche 2 de matériau (voir figure 1).

Au contraire, le filtre optique 135 présente une transmission lumineuse élevée dans le domaine infra-rouge de manière à transmettre une partie importante du flux de chaleur rayonnée 131A vers le détecteur photo-thermique 131.

Après transmission par le filtre optique 135, le flux de chaleur rayonnée 131A est collecté par les moyens optiques de collection 132 qui focalisent ce flux de chaleur rayonnée 131A sur le détecteur photo-thermique 131 des moyens de détection (voir figure 1), qui peuvent alors détecter le flux de chaleur rayonnée 131A.

Dans le deuxième mode de réalisation représenté sur la figure 2, le dispositif de mesure 200 comporte en outre une tête de mesure déportée 251 qui est reliée aux moyens d'émission 220 et aux moyens de détection photo-thermiques 230 au moyen d'un faisceau 252 de fibres optiques.

Ce faisceau 252 de fibres optiques comprend une première fibre optique 252A et une deuxième fibre optique 252B.

La première fibre optique 252A est connectée en sortie de la diode laser de sorte que le faisceau lumineux 121A émis par la diode laser est couplé à l'intérieur de la première fibre optique 252A pour être transporté jusqu'à la tête de mesure déportée 251 (voir figure 2).

La première fibre optique 252A comprend à l'une de ses extrémités, située vers la tête de mesure déportée 251, un système de focalisation 253 à fibre optique permettant de focaliser le faisceau lumineux 121A à la sortie de la tête de mesure déportée 251.

La tête de mesure déportée 251 comporte par ailleurs un filtre optique 254 et un système de collection 255 à fibre optique de manière à filtrer et à focaliser le flux de chaleur rayonnée 131A par la couche 2 dans la deuxième fibre optique 252B, en le couplant à l'une de ses extrémités, située vers la tête de mesure déportée 251 (voir figure 2).

Ainsi configurée, la tête de mesure déportée 251 achemine, grâce à la première fibre optique 252A, le faisceau lumineux 121A émis par la source lumineuse 121 et collecte le flux de chaleur rayonnée 131A par la couche 2 de matériau chauffée par l'irradiation du faisceau lumineux 121A sur celle-ci.

Ce flux de chaleur rayonnée 131A est ensuite transporté, grâce à la deuxième fibre 252B, jusqu'au détecteur photo-thermique 131 des moyens de détection photo-thermiques 230, l'autre extrémité de la deuxième fibre optique 252B, située près du détecteur photo-thermique 131, étant connectée avec l'entrée du détecteur photo-thermique 131.

De cette façon, les moyens de détection photo-thermiques 230 détectent le flux de chaleur rayonnée 131A par la couche 2 et délivrent le signal de mesure 133A qui est représentatif de ce flux de chaleur rayonnée 131A.

Grâce à la présence de la tête de mesure déportée 251, reliée aux moyens d'émission 220 et aux moyens de détection 230 par le faisceau 252 de fibres optiques, les moyens d'émission 220 et les moyens de détection 230 peuvent être disposés à distance de la couche 2 de matériau dont l'épaisseur doit être déterminée.

Ceci est particulièrement avantageux, comme cela sera décrit en détail plus loin, dans le cas où cette couche 2 de matériau présente une température très élevée, qui serait susceptible de dégrader les moyens d'émission 220 et/ou les moyens de détection 230.

En utilisant des fibres optiques de grande longueur, par exemple de longueur supérieure à 5 ou 10 mètres, on éloigne ainsi notamment la diode laser constituant la source lumineuse 121 de la couche 2 de matériau ce qui évite de détériorer la diode laser. Ceci permet également une meilleure stabilité de la diode laser, en puissance et en longueur d'onde.

On peut également envisager d'éloigner uniquement les moyens d'émission ou uniquement les moyens de détection grâce à l'utilisation d'une fibre optique.

En variante, le détecteur photo-thermique peut être placé dans la tête de mesure déportée pour collecter directement le flux de chaleur rayonnée et le transmettre aux moyens de détection photo-thermiques grâce à la fibre optique reliant la tête de mesure déportée et les moyens de détection photo-thermiques.

On va désormais décrire, en référence à la figure 3, le procédé de mesure de l'épaisseur de la couche 2 de matériau selon l'invention qui utilise l'un ou l'autre des dispositifs de mesure 100, 200 des figures 1 et 2.

Dans l'exemple décrit ici, on utilise un ensemble de vingt-deux fréquences de modulation, référencées respectivement $f_{m,1}$, $f_{m,2}$, ... jusqu'à $f_{m,22}$., ces fréquences de modulation $f_{m,1}$, $f_{m,2}$, ..., $f_{m,22}$ étant toutes différentes les unes des autres.

Selon ce mode de réalisation particulier, le procédé de mesure comporte ici trois périodes successives :

- une première période P1 (voir figure 3) qui comprend la calibration (bloc A de la figure 3) des moyens d'émission 120, 220 par rapport aux moyens de commande 110 à chacune des fréquences de modulation $f_{m,1}$, $f_{m,2}$, ..., $f_{m,22}$ utilisées,
- une deuxième période P2 (voir figure 3) qui comprend, pour chaque fréquence de modulation $f_{m,1}$, $f_{m,2}$, ..., $f_{m,22}$ :

  - une étape de chauffage (bloc B de la figure 3) de la couche 2 au moyen du faisceau lumineux 121A,
  - une étape de détection (bloc C de la figure 3) du flux de chaleur rayonnée 131A grâce au détecteur photo-thermique 131,
  - une étape de filtrage numérique (bloc D de la figure 3) du signal de mesure 133A grâce à l'UEI 140, et
  - une étape de calcul du déphasage de mesure $\Delta\phi_{mes}$ (bloc E de la figure 3) grâce à l'UEI 140, et
  - une troisième période P3 (voir figure 3) qui comprend la détermination (bloc F de la figure 3) de l'épaisseur de la couche 2 de matériau grâce à l'UEI 140.

On va décrire ci-après ces différentes phases.

Première période P1

Lors de cette première période P1, on réalise, pour chaque fréquence de modulation $f_{m,1}$, $f_{m,2}$, ..., $f_{m,22}$, une étape de calibration (voir bloc A de la figure 3) des moyens d'émission 120, 220 pour déterminer grâce aux moyens de détection photo-thermiques 130, 230, aux fréquences de modulation $f_{m,1}$, $f_{m,2}$, ..., $f_{m,22}$ considérée, les déphasages de calibration $\Delta\phi_{cal,1}$, $\Delta\phi_{cal,2}$, ..., $\Delta\phi_{cal,22}$ entre la puissance optique 21 modulée et le signal de commande 11 (voir figure 4).

Cette étape de calibration peut être simplement réalisée avec les dispositifs de mesure 100, 200 représentés sur les figures 1 et 2 en utilisant un miroir plan positionné et orienté en lieu et place de la couche 2 et du substrat 1 et en prenant soin d'ôter le filtre optique 135, 254 à chaque fois afin de mesurer le faisceau lumineux réfléchi 121B par le miroir grâce aux moyens de détection photo-thermiques 130, 230.

Dans cette configuration, le signal de mesure 133A délivré par les moyens de détection 130, 230 est sinusoïdal et aucun filtrage numérique de ce signal de mesure 133A n'est nécessaire. L'UEI 140 détermine alors, pour chaque fréquence de modulation $f_{m,1}$, $f_{m,2}$, ..., $f_{m,22}$, les déphasages de calibration $\Delta\phi_{cal,1}$, $\Delta\phi_{cal,2}$, ..., $\Delta\phi_{cal,22}$ entre la diode laser et le générateur de courant 111 et l'enregistre dans les moyens de mémorisation 143 de l'UEI 140.

Ce déphasage de calibration $\Delta\phi_{cal}$, mesuré grâce au photo-détecteur 131, est fonction du déphasage $\Delta\phi_{opt/com}$ entre la puissance optique 21 modulée et le signal de commande 11. Plus précisément ici, le déphasage de calibration $\Delta\phi_{cal}$ comprend un biais systématique lié à la phase interne $\phi_{int}$ du photo-détecteur 131 de sorte que le déphasage de calibration $\Delta\phi_{cal}$ est la somme du déphasage $\Delta\phi_{opt/com}$ et de la phase interne $\phi_{int}$ du photo-détecteur 131 et de l'électronique de la chaîne d'acquisition. On a ainsi les relations suivantes :

$$\Delta\phi_{cal} = \Delta\phi_{opt/com} + \phi_{int} = (\phi_{opt} - \phi_{com}) + \phi_{int} = (\phi_{opt} + \phi_{int}) - \phi_{com}$$

À la fin de la première période P1, les différents déphasages de calibration $\Delta\phi_{cal,1}$, $\Delta\phi_{cal,2}$, ..., $\Delta\phi_{cal,22}$ déterminés respectivement pour l'ensemble des vingt-deux fréquences de modulation $f_{m,1}$, $f_{m,2}$, ..., $f_{m,22}$, sont déterminés et enregistrés dans les moyens de mémorisation 143 de l'UEI 140.

De préférence, cette première phase est réalisée préalablement aux deuxième et troisième phases P2, P3.

Deuxième période P2

La deuxième période P2 du procédé de mesure débute avec une étape de chauffage (bloc B de la figure 3) de la couche 2 de matériau grâce à l'irradiation de la couche 2 avec le faisceau lumineux 121A issu des moyens d'émission 120, 220 du dispositif de mesure 100, 200 (voir figures 1 et 2).

Une première étape de chauffage est par exemple réalisée pour une première fréquence de modulation $f_{m,1}$.

Vient ensuite une première étape de détection (bloc C de la figure 3), grâce aux moyens de détection photo-thermiques 130, 230, du flux de chaleur rayonnée 131A par la couche 2 chauffée au moyen du faisceau lumineux 121A dont la puissance optique 21 est donc modulée sinusoïdalement à la première fréquence de modulation $f_{m,1}$.

Le flux de chaleur rayonnée 131A est collecté par le détecteur photo-thermique 131, et les moyens de détection 130, 230 délivrent alors un premier signal de mesure 133A qui est représentatif du flux de chaleur rayonnée 131A par la couche 2 de matériau.

Lors d'une première étape de filtrage numérique (bloc C de la figure 3), ce premier signal de mesure 133A est ensuite filtré numériquement par les moyens de filtrage numérique 141 de l'UEI 140 de manière à en extraire une première composante sinusoïdale 31A modulée à la première fréquence de modulation $f_{m,1}$.

Cette première composante sinusoïdale 31A est alors transmise aux moyens de calcul 142 de l'UEI 140 qui déterminent une première phase de mesure $\phi_{mes,1}$ de cette première composante sinusoïdale 31A.

Enfin, lors d'une première étape de calcul (bloc E de la figure 3), les moyens de calcul 142 calculent, pour la première fréquence de modulation $f_{m,1}$, un premier déphasage $\Delta\phi_{th/opt,1}$ entre la première composante sinusoïdale 31 du flux de chaleur rayonnée 131A et la puissance optique 21 modulée du faisceau lumineux 121A.

Ce premier déphasage $\Delta\phi_{th/opt,1}$ est calculé à partir du premier déphasage de mesure $\Delta\phi_{mes,1}$ entre la première phase de mesure $\phi_{mes,1}$ de la première composante sinusoïdale 31A et la première phase de commande $\phi_{com,1}$ du signal de commande 11, et du premier déphasage de calibration $\Delta\phi_{cal,1}$ préalablement déterminé lors de la première étape de calibration de la première période P1 (voir flèche en trait plein entre le bloc A et le bloc E sur la figure 3).

On a en particulier les relations suivantes :

$$\Delta\phi_{th/opt,1} = \Delta\phi_{mes,1} - \Delta\phi_{cal,1},$$

avec $\Delta\phi_{mes,1} = \phi_{mes} - \phi_{com}$ et $\Delta\phi_{cal,1} = (\phi_{opt} + \phi_{int}) - \phi_{com}$,

donc, $\Delta\phi_{th/opt,1} = (\phi_{mes} - \phi_{com}) - [(\phi_{opt} + \phi_{int}) - \phi_{com}]$

soit $\Delta\phi_{th/opt,1} = [(\phi_{th} + \phi_{int}) - \phi_{com}] - [(\phi_{opt} + \phi_{int}) - \phi_{com}]$, qui peut s'écrire : $\Delta\phi_{th/opt,1} = (\phi_{th} + \phi_{int}) - (\phi_{opt} + \phi_{int})$.

Cela nous donne finalement : $\Delta\phi_{th/opt,1} = \phi_{th} - \phi_{opt}$.

Ainsi, en utilisant les moyens de détection photo-thermiques 130 ; 230 à la fois pour l'étape de calibration et pour l'étape de détection, il est possible de s'affranchir, quelle que soit la fréquence de modulation $f_m$ du signal de commande 11, de la phase interne du détecteur photo-thermique 131 et d'obtenir, grâce au procédé de mesure selon l'invention, une mesure très précise du déphasage $\Delta\phi_{th/opt}$ entre le flux de chaleur rayonnée 131A et le faisceau lumineux 121A.

Selon l'exemple décrit ici du procédé de mesure, on utilise vingt-deux fréquences de modulation.

Cependant, le procédé de mesure selon l'invention peut être mis en oeuvre pour une seule fréquence de modulation du signal de commande, ou pour tout nombre de fréquences de modulation supérieur ou égal à un.

La précision du procédé de mesure est améliorée lorsque plusieurs fréquences de modulation sont utilisées.

De préférence, on utilise au moins cinq fréquences de modulation. Plus préférentiellement, on utilise plus de dix fréquences de modulation.

Lors de la deuxième période P2, on répète les étapes de calibration, de chauffage, et de détection pour chacune des autres fréquences de modulation $f_{m,2}$, ..., $f_{m,22}$.

Lors des autres étapes de calcul, on calcule également, pour ces autres fréquences de modulation $f_{m,2}$, ..., $f_{m,22}$, des autres déphasages $\Delta\phi_{th/opt,2}$, ..., $\Delta\phi_{th/opt,22}$ entre les autres composantes sinusoïdales aux autres fréquences de modulation $f_{m,2}$, ..., $f_{m,22}$ du flux de chaleur rayonnée 131A et la puissance optique 21 modulée du faisceau lumineux 121A à ces autres fréquences de modulation $f_{m,2}$, ..., $f_{m,22}$.

De manière avantageuse, pour deux fréquences de modulation particulières étudiées successivement $f_m$ et $f'_m$, les étapes de chauffage (bloc B de la figure 3) et de détection (bloc C de la figure 3) réalisées pour la fréquence de modulation $f'_m$ étudiée ultérieurement sont exécutées en parallèle avec les étapes de filtrage numérique (bloc D de la figure 3) et de calcul (bloc E de la figure 3) réalisées pour la fréquence de modulation $f_m$ étudiée juste avant (voir flèche G en trait pointillé entre le bloc C et le bloc B sur la figure 3).

De cette façon, la durée de la deuxième période P2 est réduite et on obtient plus rapidement l'ensemble des déphasages $\Delta\phi_{th/opt,1}$, $\Delta\phi_{th/opt,2}$, ..., $\Delta\phi_{th/opt,22}$ calculés pour chacune des fréquences de modulation $f_{m,1}$, $f_{m,2}$, ..., $f_{m,22}$.

Ainsi, à l'issue de la deuxième période P2, on dispose d'un ensemble de valeurs expérimentales des déphasages $\Delta\phi_{th/opt,1}$, $\Delta\phi_{th/opt,2}$, ..., $\Delta\phi_{th/opt,22}$ mesurés, aux différentes fréquences de modulation $f_{m,1}$, $f_{m,2}$, ..., $f_{m,22}$, entre la composante sinusoïdale 31 du flux de chaleur rayonnée 131A et la puissance optique 21 modulée du faisceau lumineux 121A.

Troisième période P3

Lors de la troisième période P3, on réalise une étape de détermination (bloc F de la figure 3) de l'épaisseur de la couche 2 de matériau en fonction des déphasages $\Delta\phi_{th/opt,1}$, $\Delta\phi_{th/opt,2}$, ..., $\Delta\phi_{th/opt,22}$ calculés pour chacune des fréquences de modulation $f_{m,1}$, $f_{m,2}$, ..., $f_{m,22}$ entre la composante sinusoïdale 31 du flux de chaleur rayonnée 131A par la couche 2 et la puissance optique 21 modulée du faisceau lumineux 121A.

À cet effet, il est possible de procéder à l'aide d'une régression statistique sur les valeurs expérimentales des déphasages $\Delta\phi_{th/opt,1}$, $\Delta\phi_{th/opt,2}$, ..., $\Delta\phi_{th/opt,22}$ mesurés.

Plus précisément, on réalise un ajustement de courbe, en comparant les valeurs expérimentales des déphasages $\Delta\phi_{th/opt,1}$, $\Delta\phi_{th/opt,2}$, ..., $\Delta\phi_{th/opt,22}$ calculés lors de la deuxième période P2 avec des valeurs théoriques obtenues au moyen d'une courbe théorique représentative du déphasage théorique $\Delta\phi_{th/opt,theo}$ entre la composante sinusoïdale 31 et la puissance optique 21 modulée en fonction de la fréquence de modulation.

En effet, on montre que, à une fréquence de modulation $f_m$ particulière, le déphasage théorique $\Delta\phi_{th/opt,theo}$ s'exprime, en fonction de l'épaisseur d de la couche 2 de matériau, par exemple selon la relation mathématique (relation R1) suivante :

$$\Delta\varphi th/opt(fm)$$
$$= \arg(\int_0^{+\infty} \frac{\frac{1}{2}x \times \exp(-\frac{x^2}{4})}{\kappa_1^2 - \alpha_c^2}$$
$$\times \left\{ \frac{e^{-\kappa_1 d}}{\kappa_1 D} \left[ (e^{-\alpha_c d} - e^{-\kappa_1 d})(1 + k_s \kappa_2 R_{cont}) + \left(e^{-\kappa_1 d} - \frac{\kappa_1}{\alpha_c} e^{-\alpha_c d}\right) \frac{k_s \kappa_2}{k_c \kappa_1} \right] \right.$$
$$\left. + \left(1 - \frac{\alpha_c}{\kappa_1}\right) \right\} dx)$$

où $D = \left(1 + e^{-2\kappa_1 d}\right)\frac{k_s \kappa_2}{k_c \kappa_1} + (1 - k_s \kappa_2 R_{cont})$, et

$$\kappa_1 = \sqrt{x^2/r_0^2 - 2\pi i f \rho_c C_c / k_c} \text{ et } \kappa_2 = \sqrt{x^2/r_0^2 - 2\pi i f \rho_s C_s / k_s}$$

Dans la formule précédente interviennent les différentes constantes physiques dépendant des matériaux ainsi que des paramètres géométriques. En particulier :

- $\rho_c C_c$ et $\rho_s C_s$ sont respectivement les capacités calorifiques volumiques, exprimées en Joule par Kelvin et par mètre-cube (J.K$^{-1}$.m$^3$) de la couche 2 et du substrat 1,
- $k_c$ et $k_s$ sont respectivement les conductivités thermiques, exprimées en Watt par mètre et par Kelvin (W.m$^{-1}$.K$^{-1}$), de la couche 2 et du substrat 1,
- d est l'épaisseur, exprimée en mètre (m) de la couche 2 de matériau,
- $r_0$ est le rayon à 1/e, exprimé en mètre, du faisceau lumineux 121A laser (e est une constante égale à e$^1$ = *exp(1)*, *exp* étant la fonction exponentielle),
- $R_{cont}$ est la résistance thermique, exprimée en mètre-carré Kelvin par Watt (m$^2$.K.W$^{-1}$) à l'interface entre la couche 2 et le substrat 1, et
- $\alpha_c$ est le coefficient d'absorption par mètre (m$^{-1}$) de la couche 2 de matériau à la longueur d'onde d'émission $\lambda_L$ du faisceau lumineux 121A émis par la source lumineuse 121.

Ainsi, la courbe représentative du déphasage théorique $\Delta\phi_{th/opt,theo}$ dépend, d'une part, de l'épaisseur d de la couche 2 de matériau, et, d'autre part, de ces constantes physiques (bloc F1 de la figure 3), l'épaisseur d et ces constantes physiques étant prises comme paramètres d'ajustement pour l'ajustement de courbe.

En d'autres termes, lors de l'étape de détermination (bloc F de la figure 3), on ajuste, en fonction de ces paramètres d'ajustement, la courbe représentative du déphasage théorique $\Delta\phi_{th/opt,theo}$ entre la puissance optique 21 modulée et la composante sinusoïdale 31 en fonction de la fréquence de modulation, prenant en compte lesdits déphasages $\Delta\phi_{th/opt}$, $\Delta\phi'_{th/opt}$ calculés pour lesdites fréquences de modulation $f_m$, $f'_m$ étudiées, de sorte que la courbe représentative du déphasage théorique $\Delta\phi_{th/opt,theo}$ décrive au mieux les valeurs expérimentales des déphasages $\Delta\phi_{th/opt,1}$, $\Delta\phi_{th/opt,2}$, ..., $\Delta\phi_{th/opt,22}$ déterminées.

Une telle régression peut par exemple être réalisée en utilisant un algorithme de Levenberg-Marquardt.

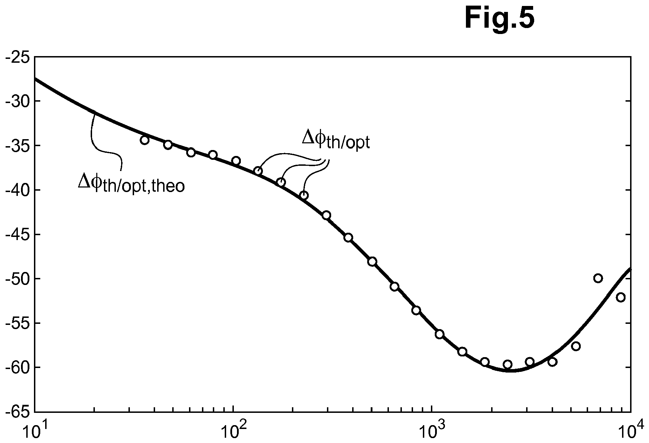

Cet ajustement est illustré à la figure 5, sur laquelle on a représenté :

- en abscisses : la fréquence de modulation $f_m$, exprimée en Hertz (Hz), selon une échelle logarithmique, et
- en ordonnées : le déphasage entre la composante sinusoïdale 31 du flux de chaleur rayonnée 131A et la puissance optique 21 modulée du faisceau lumineux 121A.

On a reporté sur cette figure 5 :

- les vingt-deux valeurs expérimentales du déphasage $\Delta\phi_{th/opt}$ calculées lors de la deuxième période P2, et
- la courbe du déphasage théorique $\Delta\phi_{th/opt,theo}$ entre la composante sinusoïdale 31 du flux de chaleur rayonnée 131A et la puissance optique 21 modulée du faisceau lumineux 121A en fonction de la fréquence de modulation obtenue en utilisant la méthode inverse de type Levenberg-Marquart.

Cette meilleure courbe, au sens de Levenberg-Marquardt, est obtenue pour un ensemble de paramètres d'ajustement.

On détermine alors l'épaisseur d de la couche 2 de matériau comme étant l'un de ces paramètres d'ajustement de cette meilleure courbe théorique représentative ajustée.

Selon une variante, le procédé de mesure est mis en oeuvre en utilisant une seule fréquence de modulation du signal de commande.

L'épaisseur de la couche 2 de matériau est déterminée en fonction du déphasage $\Delta\phi_{th/opt}$ entre la composante sinusoïdale du flux de chaleur rayonnée 131A et la puissance optique 21 modulée du faisceau lumineux en utilisant la même relation R1 que précédemment.

Dans cette relation, on affecte alors aux différentes grandeurs thermo-physiques des valeurs prédéterminées en fonction de la nature du matériau de la couche 2, de la nature du substrat 1 et des conditions expérimentales, telle que la température par exemple.

Lors de cette affectation, il est possible de fixer une plage de valeurs possibles pour les différentes grandeurs thermo-physiques.

Le dispositif de mesure et le procédé de mesure selon l'invention trouvent une application particulièrement avantageuse pour la mesure de l'épaisseur d'une couche déposée sur un substrat métallique par galvanisation, généralement à chaud, par exemple pour protéger ce substrat métallique contre la corrosion.

Dans ce cas, la couche 2 est composée majoritairement de zinc, avec une teneur en zinc comprise entre 75% et 100% en poids de zinc.

L'invention concerne ainsi également un procédé de galvanisation au cours duquel :

- on prépare une surface de dépôt du substrat 1 métallique,
- on plonge d'abord le substrat 1 métallique dans un bain de zinc en fusion, le zinc étant alors à une température comprise entre 420°C et 480°C ;
- on sort le substrat 1 métallique du bain de zinc en fusion, le substrat 1 métallique étant alors recouvert par la couche 2 de zinc ;
- on détermine l'épaisseur d de ladite couche 2 de zinc déposée sur ledit substrat 1 métallique selon un procédé de mesure tel que décrit précédemment.

Un tel procédé de galvanisation permet de déposer des couches de zinc ayant des épaisseurs comprises généralement entre 1 micromètre et 1 millimètre (mm), en fonction de la durée de trempage, du type d'acier utilisé, de la température du bain de zinc en fusion.

Lors de l'étape de préparation du substrat 1, celui-ci subit un dégraissage, un décapage et une *« fluxation »,* terme anglais désignant une opération destinée à empêcher la réoxydation du substrat 1.

Le substrat 1 métallique est plongé dans le bain de zinc en fusion pendant un temps de plongée de quelques minutes, par exemple entre 5 et 10 minutes, en fonction de la nature de l'acier et de l'épaisseur de zinc souhaitée.

Les étapes de plongée et de sortie du bain du substrat 1 métallique peuvent être réalisées « au trempé » ou « en continu ». Dans une galvanisation au trempé, le substrat 1 à recouvrir de zinc est introduit dans le bain de zinc en fusion, laissé immobile dans le bain pendant le temps de plongée et ressorti du bain. Dans une galvanisation en continu, on déroule une bande d'acier dans le bain de zinc de façon ininterrompue et à une certaine vitesse et on la ré-enroule en sortie de bain.

De manière particulièrement avantageuse, grâce au dispositif et au procédé selon l'invention, il est possible de réaliser l'étape de détermination à la sortie du bain, lorsque la couche 2 de zinc présente une température comprise entre 150 et 480 degrés Celsius.

La vérification de l'épaisseur de la couche 2 de zinc déposée sur le substrat 1 est ainsi réalisée très rapidement, à chaud, sans attendre le refroidissement de la couche 2 de zinc et de son substrat 1, qui peut prendre jusqu'à une journée.

Le deuxième mode de réalisation du dispositif 200 est alors particulièrement avantageux, car la tête de mesure déportée 251 à distance de la source lumineuse 121 et des moyens de détection 230 permet d'éviter les perturbations et/ou dégradations qui pourraient être entraînées par la proximité de ces éléments de la couche 2 de zinc à haute température.

En pratique, la mesure de l'épaisseur de la couche 2 de zinc peut être faite dans un délai compris entre 0,1 seconde et 15 minutes après la sortie du substrat 1 du bain de zinc en fusion.

Avantageusement, lorsque la mesure de l'épaisseur de la couche 2 de zinc montre que cette épaisseur est inférieure à une épaisseur de zinc seuil souhaitée sur le substrat 1, il est alors possible de replonger le substrat 1 dans le bain de zinc en fusion pour poursuivre le dépôt de zinc sur le substrat 1.

Au contraire, dans l'état de la technique, les méthodes de mesure de l'épaisseur de la couche de zinc sont réalisées après une longue période de, refroidissement, typiquement supérieure à une heure, ce qui interdit toute replongée du substrat dans le bain de zinc en fusion. Il est alors nécessaire de décaper le substrat en le plongeant dans un bain de dézinguage pour ôter la couche de zinc déposée et de recommencer la galvanisation en laissant le substrat plus longtemps dans le bain de zinc en fusion pour obtenir l'épaisseur souhaitée pour la couche de zinc.

Ceci présente l'inconvénient d'être long et coûteux.

Le procédé de galvanisation selon l'invention autorise donc une mesure d'épaisseur très rapide et si besoin est, un ajustement de cette épaisseur très rapide.

Ceci est particulièrement intéressant lors de la réalisation d'une série de pièces en grande quantité, où, dans un processus d'amélioration continu, la mesure des premières pièces permet l'amélioration de la conformité des pièces suivantes.

Grâce au procédé de galvanisation selon l'invention, il est possible d'adapter, en temps réel, afin d'obtenir l'épaisseur souhaitée, les paramètres de dépôt de la couche 2 de zinc, par exemple temps de plongée du substrat 1 dans le bain, température du bain, composition du bain, vitesse de sortie du substrat 1 recouvert de la couche 2 de zinc ou encore, dans le cas d'une galvanisation en continu, vitesse de défilement de la bande d'acier et réglage des jets d'air comprimé qui soufflent de part et d'autre de la bande d'acier galvanisée en sortie de bain pour enlever un surplus encore liquide de zinc.

Il n'est donc pas nécessaire de paramétrer le dépôt de la couche 2 de zinc de manière à obtenir une épaisseur très supérieure à l'épaisseur souhaitée et éviter ainsi les opérations de décapage et retrempage du substrat 1 dans le bain.

Le procédé selon l'invention est donc particulièrement économique.

Le procédé de mesure selon l'invention décrit ci-dessus présente donc de nombreux avantages lorsqu'il est mis en oeuvre à haute température, supérieure à 150°C, comme dans le cadre du procédé de galvanisation décrit ci-dessus :

- le rapport signal à bruit est meilleur qu'à température ambiante ;
- les détecteurs photo-thermiques infra-rouges sont moins chers dans les bandes de longueurs d'onde les plus faibles correspondant à un flux de chaleur rayonnée à haute température ;
- la mesure est réalisée sans contact avec la couche de matériau à haute température ce qui permet de ne pas endommager le dispositif de mesure ;
- la mise en oeuvre du deuxième mode de réalisation du dispositif de mesure 200 permet d'éloigner la tête de mesure des autres parties du dispositif de mesure afin de réaliser la mesure à proximité du substrat et de la couche de matériau à haute température, en préservant la source lumineuse et le détecteur photo-thermique d'un rayonnement infra-rouge excessif.

Le procédé de mesure et le procédé de galvanisation selon l'invention apporte un gain en termes de coût et de rapidité aux industriels grâce à :

- la réduction des coûts liés au dézingage et à la deuxième galvanisation en cas de non-conformité pour la galvanisation au trempé ;
- la réduction des coûts liés à la rétroaction possible sur la chaîne de production ;
- la réduction des délais de livraison par un traitement rapide des pièces non conformes, c'est-à-dire pour lesquelles l'épaisseur mesurée de la couche de zinc est inférieure à l'épaisseur seuil souhaitée ;
- la plus grande facilité d'intégration par l'utilisation d'une tête de mesure déportée résistant aux hautes températures.

On reporte ci-dessous des résultats d'essais réalisés sur quatre échantillons d'acier galvanisés, dont on donne quelques caractéristiques :

Échantillon n°1 : pièce d'acier galvanisée de dimension 4 cm x 6 cm, avec une couche de zinc d'environ 45 microns ;
Échantillon n°2 : pièce de métallerie de dimension 4 cm x 6 cm, épaisseur de zinc : environ 55 microns ;
Échantillon n°3 : pièce de métallerie de dimension 4 cm x 6 cm, épaisseur de zinc : environ 60 microns ;
Échantillon n°4 : pièce de métallerie galvanisée de dimension 2,5 cm x 5 cm, épaisseur de zinc : environ 170 microns.

On mesure, pour les quatre échantillons, l'épaisseur de la couche de zinc en utilisant :

- un procédé de mesure à froid (procédé n°1) conforme à l'état de la technique, utilisant un palpeur magnétique à courants de Foucault de type Dualscope MP-0 fabriqué par la société Helmut Fischer, et
- le procédé de mesure selon l'invention (procédé n°2) utilisant le dispositif de mesure 20 de la figure 2 avec une tête de mesure déportée 251, située à une distance de 10 cm des échantillons et éloignée des moyens d'émission 220 et des moyens de détection 230 d'une distance de 2 m.

Afin de se mettre dans des conditions « à chaud » pour le procédé de mesure selon l'invention, on colle les échantillons à une plaque d'acier chauffée par un chalumeau. La température des échantillons est mesurée avec un thermomètre numérique et la durée et l'intensité du chauffage de la plaque d'acier sont ajustées de sorte que les échantillons soient maintenus à une température comprise entre 350 °C et 400 °C durant la mesure de l'épaisseur de la couche de zinc.

On donne dans le tableau ci-dessous les résultats des épaisseurs mesurées (en micromètres) sur les différents échantillons avec les deux procédés, à froid et à chaud.

|  | Épaisseur théorique ($\mu$m) | Procédé n°1 (art antérieur) | Procédé n°2 (invention) |
|---|---|---|---|
| Échantillon n°1 | 45 | 45,6 | 47,0 |
| Échantillon n°2 | 55 | 56,2 | 55,9 |
| Échantillon n°3 | 60 | 62,0 | 61,4 |
| Échantillon n°4 | 170 | 164,9 | 163,5 |

On observe ainsi sur le tableau précédent que les résultats obtenus par les deux procédés sont tout à fait comparables, démontrant que le procédé de mesure selon l'invention permet de réaliser la mesure, à chaud et sans contact, de façon optimale sur des pièces d'acier galvanisées.

Cette mesure est rapide et, contrairement à l'art antérieur, peut intervenir dès la sortie des pièces d'acier du bain de galvanisation, permettant ainsi de corriger en temps réel les différents paramètres du procédé de galvanisation.

**Revendications**

1. Procédé de mesure de l'épaisseur (d) d'une couche (2) d'un matériau grâce à des moyens d'émission (120 ; 220) d'un faisceau lumineux (121A) commandés électriquement par un signal de commande (11) sinusoïdal ayant une fréquence de modulation $f_m$ et une phase de commande $\phi_{com}$, de sorte que ledit faisceau lumineux (121A) présente une puissance optique (21) modulée sinusoïdalement à ladite fréquence de modulation $f_m$, ledit procédé de détermination comportant :

   - une étape de calibration (A) consistant à déterminer, grâce à des moyens de détection photo-thermiques (130 ; 230), un déphasage de calibration $\Delta\phi_{cal}$ entre ladite puissance optique (21) modulée et ledit signal de commande (11) pour ladite fréquence de modulation $f_m$,
   - une étape de chauffage (B) de ladite couche (2) de matériau par l'irradiation de ladite couche (2) de matériau avec ledit faisceau lumineux (121A),
   - une étape de détection (C) d'une composante sinusoïdale (31) d'un flux de chaleur rayonnée (131A) par ladite couche (2) de matériau chauffée, grâce auxdits moyens de détection photo-thermiques (130 ; 230) utilisés lors de ladite étape de calibration (A),
   - une étape de calcul (E), pour ladite fréquence de modulation $f_m$ du signal de commande (11), d'un déphasage $\Delta\phi_{th/opt}$ entre ladite composante sinusoïdale (31) du flux de chaleur rayonnée (131A) et ladite puissance optique (21) modulée du faisceau lumineux (121A), en tenant compte dudit déphasage de calibration $\Delta\phi_{cal}$ préalablement déterminé lors de ladite étape de calibration (A), et
   - une étape de détermination (F) de l'épaisseur (d) de ladite couche (2) de matériau en fonction dudit déphasage

$\Delta\phi_{th/opt}$ entre ladite composante sinusoïdale (31) du flux de chaleur rayonnée (131A) et ladite puissance optique (21) modulée du faisceau lumineux (121A).

2. Procédé de mesure selon la revendication 1, selon lequel :

- lors de l'étape de détection, lesdits moyens de détection photo-thermiques (130 ; 230) délivrent un signal de mesure (133A) qui est représentatif dudit flux de chaleur rayonnée (131A),
- il est prévu une étape de filtrage numérique (D) dudit signal de mesure (133A) de manière à :

- extraire une composante sinusoïdale (31A) dudit signal de mesure (133A) qui est modulée à ladite fréquence de modulation $f_m$ du signal de commande (11), et
- déterminer une phase de mesure $\phi_{mes}$ de cette composante sinusoïdale (31A) dudit signal de mesure (133A),

- lors de l'étape de calcul (E), ledit déphasage $\Delta\phi_{th/opt}$ entre ladite composante sinusoïdale (31) du flux de chaleur rayonnée (131A) et ladite puissance optique (21) modulée du faisceau lumineux (121A) est calculé, pour ladite fréquence de modulation $f_m$ du signal de commande (11), en tenant compte d'un déphasage de mesure $\Delta\phi_{mes}$ entre ladite composante sinusoïdale (31A) du signal de mesure (133A) et ledit signal de commande (11), soit $\Delta\phi_{mes} = \phi_{mes} - \phi_{com}$.

3. Procédé de mesure selon l'une des revendications 1 et 2, selon lequel :

- on répète les étapes antérieures à ladite étape de calcul (E) pour une autre fréquence de modulation $f'_m$ du signal de commande (11), différente de ladite fréquence de modulation $f_m$ utilisée précédemment,
- lors de l'étape de calcul (E), on calcule également, pour ladite autre fréquence de modulation $f'_m$, un autre déphasage $\Delta\phi'_{th/opt}$ entre ladite composante sinusoïdale (31) à cette autre fréquence de modulation $f'_m$ du flux de chaleur rayonnée (131A) et ladite puissance optique (21) modulée du faisceau lumineux (121A) à cette autre fréquence de modulation $f'_m$, et
- lors de l'étape de détermination (F), on détermine l'épaisseur (d) de ladite couche (2) de matériau en fonction en outre dudit autre déphasage $\Delta\phi'_{th/opt}$ calculé.

4. Procédé de mesure selon la revendication 3, selon lequel lesdites étapes de chauffage (B) et de détection (C) répétées pour ladite autre fréquence de modulation $f'_m$ du signal de commande (11) sont exécutées en parallèle de l'exécution des étapes postérieures à ladite étape de détection (C) pour ladite fréquence de modulation $f_m$ du signal de commande (11).

5. Procédé de mesure selon l'une des revendications 3 et 4, selon lequel lors de l'étape de détermination (E) :

- on ajuste, en fonction de paramètres d'ajustement, une courbe représentative d'un déphasage théorique $\Delta\phi_{th/opt,theo}$ entre ladite composante sinusoïdale (31) du flux de chaleur rayonnée (131A) et ladite puissance optique (21) modulée du faisceau lumineux (121A) en fonction de la fréquence de modulation $f_m$ du signal de commande (11), prenant en compte les déphasages $\Delta\phi_{th/opt}$, $\Delta\phi'_{th/opt}$ calculés pour différentes fréquences de modulation $f_m$, $f'_m$, et
- on détermine l'épaisseur (d) de ladite couche (2) de matériau comme étant l'un desdits paramètres d'ajustement de la courbe représentative ajustée.

6. Procédé de galvanisation d'un substrat (1) métallique comprenant les étapes successives suivantes :

- préparer une surface de dépôt dudit substrat (1) métallique,
- plonger ledit substrat (1) métallique dans un bain de zinc en fusion,
- sortir ledit substrat (1) métallique du bain de zinc en fusion, ladite surface de dépôt du substrat (1) métallique étant recouvert d'une couche (2) de zinc,
- déterminer l'épaisseur (d) de ladite couche (2) de zinc déposée sur ledit substrat (1) métallique selon un procédé de mesure conforme à l'une des revendications 1 à 5.

7. Procédé de galvanisation selon la revendication 6, selon lequel on détermine l'épaisseur (d) de ladite couche (2) de zinc à la sortie du bain, lorsque ladite couche (2) de zinc présente une température comprise entre 150 et 480 degrés Celsius.

8. Procédé de galvanisation selon la revendication 7, selon lequel on compare l'épaisseur (d) de ladite couche (2) de zinc mesurée à la sortie du bain avec une épaisseur seuil souhaitée, et lorsque ladite épaisseur mesurée est inférieure à ladite valeur seuil, on replonge ledit substrat (1) métallique dans le bain de zinc en fusion.

9. Procédé de galvanisation d'une série de substrats métalliques selon l'une des revendications 6 et 7, selon lequel on adapte les paramètres de dépôt de la couche (2) de zinc déposée sur l'un desdits substrats de la série fonction de l'épaisseur (d) de couche (2) de zinc mesurée à la sortie du bain sur au moins un des substrats précédemment galvanisés.

10. Dispositif de mesure pour déterminer l'épaisseur (d) d'une couche (2) d'un matériau comportant :

    - des moyens de commande électrique (110) adaptés à délivrer un signal de commande (11) sinusoïdal ayant une fréquence de modulation $f_m$ et une phase de commande $\phi_{com}$,
    - des moyens d'émission (120 ; 220) d'un faisceau lumineux (121A) commandés électriquement par lesdits moyens de commande électrique (110) de sorte que ledit faisceau lumineux (121A) présente une puissance optique (21) modulée sinusoïdalement à ladite fréquence de modulation $f_m$ du signal de commande (11),
    - des moyens de détection photo-thermiques (130; 230) adaptés à détecter un flux de chaleur rayonnée (131A) par ladite couche (2) de matériau chauffée par ledit faisceau lumineux (121A) et délivrant un signal de mesure (133A) qui est représentatif dudit flux de chaleur rayonnée (131A) par ladite couche (2) de matériau,
    - des moyens de filtrage numérique (141) adaptés à extraire dudit signal de mesure (133A) une composante sinusoïdale (31A) modulée à ladite fréquence de modulation $f_m$ du signal de commande (11) pour déterminer une phase de mesure $\phi_{mes}$ de cette composante sinusoïdale (31A) dudit signal de mesure (133A), et
    - des moyens de calcul (142) adaptés à calculer, pour ladite fréquence de modulation $f_m$ du signal de commande (11), un déphasage $\Delta\phi_{th/opt}$ entre une composante sinusoïdale (31) dudit flux de chaleur rayonnée (131A) et ladite puissance optique (21) modulée du faisceau lumineux (121A), à partir :

        - d'un déphasage de mesure $\Delta\phi_{mes}$ entre ladite composante sinusoïdale (31A) du signal de mesure (133A) et ledit signal de commande (11), soit $\Delta\phi_{mes} = \phi_{mes} - \phi_{com}$, et
        - d'un déphasage de calibration $\Delta\phi_{cal}$, déterminé grâce aux moyens de détection photo-thermiques (130; 230), entre ladite puissance optique (21) modulée du faisceau lumineux (121A) et ledit signal de commande (11),

    et à déterminer l'épaisseur (d) de ladite couche (2) de matériau en fonction du déphasage $\Delta\phi_{th/opt}$ entre ladite composante sinusoïdale (31) dudit flux de chaleur rayonnée (131A) et ladite puissance optique (21) modulée du faisceau lumineux (121A).

11. Dispositif de mesure selon la revendication 10 comportant en outre une tête de mesure déportée (251) reliée auxdits moyens d'émission (220) au moyen d'un faisceau (252) de fibres optiques (252A, 252B), ladite tête de mesure déportée (251) étant adaptée à collecter ledit flux de chaleur rayonnée (131A).

## Patentansprüche

1. Verfahren zur Messung der Dicke (d) einer Materialschicht (2) mit Hilfe von Mitteln (120; 220) zum Ausstrahlen eines Lichtstrahls (121A), der durch ein sinusförmiges Steuersignal (11), das eine Modulationsfrequenz $f_m$ und eine Steuerphase $\Phi_{com}$ hat, elektrisch gesteuert wird, so daß der Lichtstrahl (121A) eine mit der Modulationsfrequenz $f_m$ sinusartig modulierte optische Leistung (21) aufweist, wobei das Bestimmungsverfahren

    - einen Kalibrierungsschritt (A), der darin besteht, mit Hilfe von photothermischen Erfassungsmitteln (130; 230) für die Modulationsfrequenz $f_m$ eine Kalibrierungsphasenverschiebung $\Delta\Phi_{cal}$ zwischen der modulierten optischen Leistung (21) und dem Steuersignal (11) zu bestimmen,
    - einen Schritt des Aufheizens (B) der Materialschicht (2) durch Bestrahlung der Materialschicht (2) mit dem Lichtstrahl (121A),
    - einen Schritt des Erfassens (C) einer sinusförmigen Komponente (31) eines Flusses (131A) von der Materialschicht (2) abgestrahlter Wärme mit Hilfe der beim Kalibrierungsschritt (A) verwendeten photothermischen Erfassungsmittel,
    - einen Schritt des Berechnens (E) einer Phasenverschiebung $\Delta\Phi_{th/opt}$ zwischen der sinusförmigen Komponente (31) des Flusses abgestrahlter Wärme (131A) und der modulierten optischen Leistung (21) des Lichtstrahls (121A) für die Modulationsfrequenz $f_m$, wobei die zuvor beim Kalibrierungsschritt (A) bestimmte Kalibrierungsphasenverschiebung $\Delta\Phi_{cal}$ berücksichtigt wird, und

- einen Schritt des Bestimmens (F) der Dicke (d) der Materialschicht (2) in Abhängigkeit von der Phasenverschiebung $\Delta\Phi_{th/opt}$ zwischen der sinusförmigen Komponente (31) des Flusses abgestrahlter Wärme (131A) und der modulierten optischen Leistung (21) des Lichtstrahls (121A)

aufweist.

2.  Meßverfahren gemäß Anspruch 1, bei dem

- beim Erfassungsschritt die photothermischen Erfassungsmittel (130; 230) ein Meßsignal (133A) liefern, das für den Fluß abgestrahlter Wärme (131A) repräsentativ ist,
- ein Schritt des digitalen Filterns (D) des Meßsignals (133A) vorgesehen ist, um

    - eine sinusförmige Komponente (31A) des Meßsignals (133A) herauszufiltern, die mit der Modulationsfrequenz $f_m$ des Steuersignals (11) moduliert ist, und
    - eine Meßphase $\Phi_{mes}$ dieser sinusförmigen Komponente (31A) des Meßsignals (133A) zu bestimmen,

- beim Berechnungsschritt (E) die Phasenverschiebung $\Delta\Phi_{th/opt}$ zwischen der sinusförmigen Komponente (31) des Flusses abgestrahlter Wärme (131A) und der modulierten optischen Leistung (21) des Lichtstrahls (121A) für die Modulationsfrequenz $f_m$ des Steuersignals (11) berechnet wird, wobei die Phasenverschiebung $\Delta\Phi_{mes}$ zwischen der sinusförmigen Komponente (31A) des Meßsignals (133A) und dem Steuersignal (11) berücksichtigt wird, d.h. $\Delta\Phi_{mes} = \Phi_{mes} - \Phi_{com}$.

3.  Meßverfahren gemäß einem der Ansprüche 1 und 2, bei dem

- die dem Berechnungsschritt (E) vorangehenden Schritte für eine von der zuvor verwendeten Modulationsfrequenz $f_m$ verschiedene andere Modulationsfrequenz $f'_m$ des Steuersignals (11) wiederholt werden,
- beim Berechnungsschritt (E) auch für die andere Modulationsfrequenz $f'_m$ eine andere Phasenverschiebung $\Delta\Phi'_{th/opt}$ zwischen der sinusförmigen Komponente (31) des Flusses abgestrahlter Wärme (131A) bei der anderen Modulationsfrequenz $f'_m$ und der modulierten optischen Leistung (21) des Lichtstrahls (121A) bei der anderen Modulationsfrequenz $f'_m$ berechnet wird, und
- beim Bestimmungsschritt (F) die Dicke (d) der Materialschicht (2) zusätzlich auch in Abhängigkeit von der berechneten anderen Phasenverschiebung $\Delta\Phi'_{th/opt}$ bestimmt wird.

4.  Meßverfahren gemäß Anspruch 3, bei dem die Schritte des Aufheizens (B) und des Erfassens (C), die für die andere Modulationsfrequenz $f'_m$ des Steuersignals wiederholt werden, parallel zur Durchführung der auf den Schritt (C) für die Modulationsfrequenz $f_m$ des Steuersignals (11) folgenden Schritte durchgeführt werden.

5.  Meßverfahren gemäß einem der Ansprüche 3 und 4, bei dem beim Bestimmungsschritt (E)

- eine für eine von der Modulationsfrequenz $f_m$ des Steuersignals (11) abhängige theoretische Phasenverschiebung $\Delta\Phi_{th/opt,theo}$ zwischen der sinusförmigen Komponente (31) des Flusses abgestrahlter Wärme (131A) und der modulierten optischen Leistung (21) des Lichtstrahls (121A) repräsentative Kurve in Abhängigkeit von Einstellparametern eingestellt wird, wobei die für verschiedene Modulationsfrequenzen $f_m$, $f'_m$ berechneten Phasenverschiebungen $\Delta\Phi_{th/opt}$, $\Delta\Phi'_{th/opt}$ berücksichtigt werden, und
- die Dicke (d) der Materialschicht (2) als einen der Einstellparameter der eingestellten repräsentativen Kurve bestimmt wird.

6.  Verfahren zum Galvanisieren eines metallenen Substrats (1), das die folgenden Schritte aufweist:

- Vorbereiten einer Beschichtungsfläche des metallenen Substrats (1),
- Eintauchen des metallenen Substrats (1) in ein Bad aus geschmolzenem Zink,
- Herausnehmen des metallenen Substrats (1) aus dem Bad aus geschmolzenem Zink, wobei die Beschichtungsfläche des metallenen Substrats (1) mit einer Zinkschicht (2) bedeckt ist,
- Bestimmen der Dicke (d) der Zinkschicht (2), die sich auf dem metallenen Substrat (1) niedergeschlagen hat, mit einem Meßverfahren gemäß einem der Ansprüche 1 bis 5.

7. Galvanisierverfahren gemäß Anspruch 6, bei dem die Dicke (d) der Zinkschicht (2) beim Herausnehmen aus dem Bad bestimmt wird, wenn die Zinkschicht (2) eine Temperatur zwischen 150 und 480 Grad Celsius aufweist.

8. Galvanisierverfahren gemäß Anspruch 7, bei dem die beim Herausnehmen aus dem Bad gemessene Dicke (d) der Zinkschicht (2) mit einer gewünschten Grenzdicke verglichen wird und, wenn die gemessene Dicke unter dem besagten Grenzwert ist, das metallene Substrat (1) wieder in das Bad aus geschmolzenem Zink eingetaucht wird.

9. Verfahren zum Galvanisieren einer Reihe von metallenen Substraten gemäß einem der Ansprüche 6 und 7, bei dem die Niederschlagsparameter der auf einem der Substrate der Reihe niedergeschlagenen Zinkschicht (2) in Abhängigkeit von der beim Herausnehmen aus dem Bad auf wenigstens einem der zuvor galvanisierten Substrate gemessenen Dicke (d) angepaßt werden.

10. Meßvorrichtung zum Bestimmen der Dicke (d) einer Materialschicht (2), die

   - elektrische Steuerungsmittel (110), die dazu ausgelegt sind, ein sinusförmiges Steuersignal (11), das eine Modulationsfrequenz $f_m$ und eine Steuerphase $\Phi_{com}$ hat, abzugeben,
   - Mittel (120; 220) zum Ausstrahlen eines Lichtstrahls (121A), der durch die elektrischen Steuerungsmittel (110) elektrisch so gesteuert wird, daß der Lichtstrahl (121A) eine mit der Modulationsfrequenz $f_m$ des Steuersignals (11) sinusartig modulierte optische Leistung (21) aufweist,
   - photothermische Erfassungsmittel (130; 230), die dazu ausgelegt sind, einen Fluß (131A) von der durch den Lichtstrahl (121A) aufgeheizten Materialschicht (2) abgestrahlter Wärme zu erfassen, und die ein Meßsignal (133A) abgeben, das für den Fluß von der Materialschicht (2) abgestrahlter Wärme (131A) repräsentativ ist,
   - digitale Filtermittel (141), die dazu ausgelegt sind, aus dem Meßsignal (133A) eine sinusförmige Komponente (31) herauszufiltern, die mit der Modulationsfrequenz $f_m$ des Steuersignals (11) moduliert ist, um eine Meßphase $\Phi_{mes}$ der sinusförmigen Komponente (31A) des Meßsignals (133A) zu bestimmen, und
   - Rechenmittel (142), die dazu ausgelegt sind, für die Modulationsfrequenz $f_m$ des Steuersignals (11) eine Phasenverschiebung $\Delta\Phi_{th/opt}$ zwischen der sinusförmigen Komponente (31) des Flusses abgestrahlter Wärme (131A) und der modulierten optischen Leistung (21) des Lichtstrahls (121A)

   - von einer Phasenverschiebung $\Delta\Phi_{mes}$ zwischen der sinusförmigen Komponente (31A) des Meßsignals (133A) und dem Steuersignal (11), d.h. $\Delta\Phi_{mes} = \Phi_{mes} - \Phi_{com}$, und
   - von einer mit den photothermischen Erfassungsmitteln (130; 230) bestimmten Kalibrierungsphasenverschiebung $\Delta\Phi_{cal}$ zwischen der modulierten optischen Leistung (21) des Lichtstrahls (121A) und dem Steuersignal (11) ausgehend zu berechnen und die Dicke (d) der Materialschicht (2) in Abhängigkeit von der Phasenverschiebung $\Delta\Phi_{th/opt}$ zwischen der sinusförmigen Komponente (31) des Flusses abgestrahlter Wärme (131A) und der modulierten optischen Leistung (21) des Lichtstrahls (121A) zu bestimmen,

   aufweist.

11. Meßvorrichtung gemäß Anspruch 10, die außerdem einen abgesetzten Meßkopf (251) aufweist, der mit den Ausstrahlungsmitteln (220) mittels eines Bündels (252) optischer Fasern (252A, 252B) verbunden ist, wobei der abgesetzte Meßkopf (251) dazu ausgelegt ist, den Fluß abgestrahlter Wärme (131A) zu sammeln.

## Claims

1. A method of measuring the thickness (d) of a layer (2) of a material by using emitter means (120; 220) for emitting a light beam (121A), the emitter means being electrically controlled by a sinusoidal control signal (11) having a modulation frequency $f_m$ and a control phase $\phi_{com}$, such that said light beam (121A) presents optical power (21) that is sinusoidally modulated at said modulation frequency $f_m$, said measurement method comprising:

   • a calibration step (A) consisting in using photothermal detector means (130; 230) to determine a calibration phase shift $\Delta\phi_{cal}$ between said modulated optical power (21) and said control signal (11) for said modulation frequency $f_m$;
   • a heating step (B) for heating said layer (2) of material by irradiating said layer (2) of material with said light beam (121A);
   • a detection step (C) for detecting a sinusoidal component (31) of a heat flux (131A) radiated by said layer (2) of heated material, by using said photothermal detector means (130; 230) as used during said calibration step (A);

• a calculation step (E) for calculating, for said modulation frequency $f_m$ of the control signal (11), a phase shift $\Delta\phi_{th/opt}$ between said sinusoidal component (31) of the radiated heat flux (131A) and said modulated optical power (21) of the light beam (121A), while taking account of said calibration phase shift $\Delta\phi_{cal}$ as previously determined during said calibration step (A); and

• a determination step (F) for determining the thickness (d) of said layer (2) of material as a function of said phase shift $\Delta\phi_{th/opt}$ between said sinusoidal component (31) of the radiated heat flux (131A) and said modulated optical power (21) of the light beam (121A).

2. A measurement method according to claim 1, wherein:

• during the detection step, said photothermal means (130; 230) deliver a measurement signal (133A) that is representative of said radiated heat flux (131A);

• a digital filtering step (D) is provided in which said measurement signal (133A) is filtered in order to:

• extract a sinusoidal component (31A) from said measurement signal (133A) that is modulated at said modulation frequency $f_m$ of the control signal (11); and

• determine a measurement phase $\phi_{mes}$ of said sinusoidal component (31A) of said measurement signal (133A); and

• during the calculation step (E), said phase shift $\Delta\phi_{th/opt}$ between said sinusoidal component (31) of the radiated heat flux (131A) and said modulated optical power (21) of the light beam (121A) is calculated for said modulation frequency $f_m$ of the control signal (11), while taking account of a measurement phase shift $\Delta\phi_{mes}$ between said sinusoidal component (31A) of the measurement signal (133A) and said control signal (11), i.e.

$$\Delta\phi_{mes} \; = \; \phi_{mes} \; - \; \phi_{com}$$

3. A measurement method according to claim 1 or claim 2, wherein:

• the steps prior to said calculation step (E) are repeated for another modulation frequency $f'_m$ of the control signal (11) that is different from said previously used modulation frequency $f_m$;

• during the calculation step (E), another phase shift $\Delta\phi'_{th/opt}$ between said sinusoidal component (31) at said other modulation frequency $f'_m$ of the radiated heat flux (131A) and said modulated optical power (21) of the light beam (121A) at said other modulation frequency $f'_m$ is also calculated, for said other modulation frequency $f'_m$; and

• during the determination step (F) the thickness (d) of said layer (2) of material is determined also as a function of said other calculated phase shift $\Delta\phi'_{th/opt}$.

4. A measurement method according to claim 3, wherein said heating and detection steps (B and C) that are repeated for said other modulation frequency $f'_m$ of the control signal (11) are executed in parallel with executing steps subsequent to said detection step (C) for said modulation frequency $f_m$ of the control signal (11).

5. A measurement method according to claim 3 or claim 4, wherein during the determination step (E):

• adjustment parameters are used to match a curve representative of a theoretical phase shift $\Delta\phi_{th/opt,theo}$ between said sinusoidal component (31) of the radiated heat flux (131A) and said modulated optical power (21) of the light beam (121A) as a function of the modulation frequency $f_m$ of the control signal (11), while taking account of the phase shifts $\Delta\phi_{th/opt}$, $\Delta\phi'_{th/opt}$ as calculated for different modulation frequencies $f_m$ and $f'_m$; and

• the thickness (d) of said layer (2) of material is determined as being one of said adjustment parameters for the matched representative curve.

6. A galvanizing method for galvanizing a metal substrate (1), the method comprising the following successive steps:

• preparing a deposition surface of said metal substrate (1) ;

• immersing said metal substrate (1) in a bath of molten zinc;

• extracting said metal substrate (1) from the bath of molten zinc, said deposition surface of the metal substrate (1) being covered in a layer (2) of zinc; and

• determining the thickness (d) of said layer (2) of zinc deposited on said metal substrate (1) by using a measurement method according to any one of claims 1 to 5.

7. A galvanizing method according to claim 6, wherein the thickness (d) of said layer (2) of zinc is determined on exiting the bath, while said layer (2) of zinc presents a temperature lying in the range 150°C to 480°C.

8. A galvanizing method according to claim 7, wherein the thickness (d) of said layer (2) of zinc as measured on exiting the bath is compared with a desired threshold thickness, and when said measured thickness is less than said threshold value, said metal substrate (1) is re-immersed in the bath of molten zinc.

9. A galvanizing method according to claim 6 or claim 7 for galvanizing a series of metal substrates, wherein the deposition parameters for depositing the layer (2) of zinc on one of said substrates of the series are adapted as a function of the thickness (d) of the layer (2) of zinc on at least one of the previously galvanized substrates, as measured on exiting the bath.

10. A measurement device for determining the thickness (d) of a layer (2) of material, the device comprising:

• electrical control means (110) adapted to deliver a sinusoidal control signal (11) having a modulation frequency $f_m$ and a control phase $\phi_{com}$;
• emitter means (120; 220) for emitting a light beam (121A), the emitter means being electrically controlled by said electrical control means (110) so that said light beam (121A) presents optical power (21) that is sinusoidally modulated at said modulation frequency $f_m$ of the control signal (11) ;
• photothermal detector means (130; 230) adapted to detect a heat flux (131A) radiated by said layer (2) of material heated by said light beam (121A) and delivering a measurement signal (133A) that is representative of said heat flux (131A) radiated by said layer (2) of material;
• digital filter means (141) adapted to extract from said measurement signal (133A) a sinusoidal component (31A) modulated at said modulation frequency $f_m$ of the control signal (11) in order to determine a measurement phase $\phi_{mes}$ of said sinusoidal component (31A) of said measurement signal (133A); and
• calculation means (142) adapted both to calculate, for said modulation frequency $f_m$ of the control signal (11), a phase shift $\Delta\phi_{th/opt}$ between a sinusoidal component (31) of said radiated heat flux (131A) and said modulated optical power (21) of the light beam (121A), from:
• a measurement phase shift $\Delta\phi_{mes}$ between said sinusoidal component (31A) of the measurement signal (133A) and said control signal (11), i.e.

$$\Delta\phi_{mes} \;=\; \phi_{mes} \;-\; \phi_{com}$$

• a calibration phase shift $\Delta\phi_{cal}$, determined using the photothermal detector means (130; 230), between said modulated optical power (21) of the light beam (121A) and said control signal (11); and also to determine the thickness (d) of said layer (2) of material as a function of the phase shift $\Delta\phi_{th/opt}$ between said sinusoidal component (31) of said radiated heat flux (131A) and said modulated optical power (21) of the light beam (121A).

11. A measurement device according to claim 10, further including a remote measurement head (251) connected to said emitter means (220) by means of a bundle (252) of optical fibers (252A, 252B), said remote measurement head (251) being adapted to collect said radiated heat flux (131A).

EP 3 017 274 B1

Fig.1

Fig.2

22

**Fig.3**

**Fig.4**

$\Delta\phi_{opt/com}$

$\Delta\phi_{th/opt}$

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0233120 A
- US 2002031164 A
- US 4513384 A

**Littérature non-brevet citée dans la description**

- Photothermal Radiometry for Spatial Mapping of Spectral and Materials Properties. Nordal and Kanstad, Scanned Image Microscopy. Academic Press, 1980
- Thermal-wave detection and thin-film thickness measurements with laser beam deflection. *Applied Optics,* 15 Octobre 1983, vol. 22 (20), 3169-3176
- **MELYUKOV et al.** Phase lock-in laser active pyrometry for surface layer characterisation of tokamaks walls. *10th International Conférence on Quantitative Infrared Thermography,* 27 Juillet 2010